# FASCICULE DE BREVET EUROPEEN

(11) **EP 2 227 303 B1**
(45) Date de publication et mention de la délivrance du brevet: **08.07.2015**
(21) Numéro de dépôt: 08872797.9
(22) Date de dépôt: 19.12.2008
(51) Int. Cl.: B01D 15/18, B01D 15/42, G01N 30/42, C22B 3/42, C22B 60/02

(54) **PROCEDE DE SEPARATION SEQUENCE MULTICOLONNES D'UN DERIVE METALLIQUE IONIQUE**
SEQUENZIERTES MEHRSPALTEN-ABTRENNUNGSVERFAHREN ZUR ABTRENNUNG EINES IONISCHEN METALLDERIVATS
MULTI-COLUMN SEQUENCED SEPARATION PROCESS FOR SEPARATING AN IONIC METAL DERIVATIVE

(30) Priorité: 20.12.2007 FR 0708966
(43) Date de publication de la demande: 15.09.2010
(73) Titulaire: Novasep Process, 54340 Pompey (FR)
(72) Inventeur: THEOLEYRE, Marc-André, F-75020 Paris (FR); GULA, Francis, F-38460 Leyrieu (FR)
(74) Mandataire: Hirsch & Associés
(86) Numéro de dépôt international: PCT/FR2008/001797
(87) Numéro de publication internationale: WO 2009/106734

(56) Documents cités:
- EP-A- 0 415 821
- WO-A-2007/144476
- US-A- 5 618 502
- US-A1- 2005 056 273
- US-B1- 6 379 554

## Description

### DOMAINE DE L'INVENTION

La présente invention a pour objet un procédé de séparation multicolonnes séquencé et un dispositif pour la mise en oeuvre de ce procédé. L'invention s'applique particulièrement à la séparation de dérivés métalliques tels que l'uranium, le nickel, le cuivre, le cobalt ainsi qu'aux autres métaux précieux présents dans les effluents de lixiviation dans les procédés hydrométallurgiques.

### ETAT DE LA TECHNIQUE

Plusieurs techniques d'extraction d'espèces métalliques sont couramment utilisées dans le domaine de la métallurgie. Particulièrement, dans le cas où les minerais extraits présentent une faible teneur en dérivé métallique, des techniques de lixiviation sont mise en oeuvre et qui consistent à extraire les parties métalliques solubles par lessivage à l'aide d'une solution solubilisante appropriée. Une fois les dérivés métalliques dissous sous forme ionique, une étape ultérieure consiste à séparer les espèces d'intérêt des impuretés ou autres polluants.

Les procédés de séparation se caractérisent par une mise en contact d'une ou plusieurs phase(s) liquide(s) (dite mobile(s)) avec une phase solide (dite stationnaire). Le dérivé métallique ionique injecté dans la phase liquide établit une ou des interactions de natures diverses avec la phase stationnaire tel que c'est le cas dans la chromatographie échange d'ions. Son déplacement au sein du dispositif chromatographique est donc différent du déplacement des autres produits contenu dans la charge à traiter. Sur la base de cette différence d'interactions, il est possible de purifier ou d'enrichir une des fractions en le dérivé métallique ionique.

Des procédés ont été proposés pour réaliser l'échange d'ions en continu. US-A-2815332 décrit un système en circuit fermé dans lequel la résine progresse à contre-courant du liquide. Cette boucle contient quatre zones isolées par des vannes et dédiées respectivement à la saturation, rinçage, régénération et rinçage. La résine progresse dans les zones et d'un compartiment à l'autre, à contre-courant de la phase liquide, sous l'effet de pulsations hydrauliques.

Le brevet US 5,618,502 concerne la séparation de dérivés métalliques ioniques. Il est décrit un procédé de séparation du zirconium et de l'hafnium par chromatographie d'échange d'anions. Le procédé décrit, utilise des résines échangeuses d'ions pour réaliser une séparation chromatographique, sans aucun phénomène d'échange d'ion. Aucune séparation n'est faite à partir d'une solution de lixiviation.

Certains auteurs ont développé pour la chromatographie un système dit SMB (Simulated Moving Bed). Ainsi, US-A-2985589 décrit un procédé de chromatographie continu, SMB, dans lequel la résine de chromatographie est fixe, répartie dans plusieurs compartiments, mais son déplacement est simulé par le déplacement à intervalle régulier de la position des entrées et des sorties de fluides. Les positions des entrées (alimentation et éluant) et des sorties (extrait et raffinat) définissent alors quatre zones. US-A-6375851 décrit un système à six zones, adaptation à l'échange d'ions du procédé décrit précédemment dans USA-2985589. Le système décrit dans le document US-A-6375851 est basé sur un SMB, sauf pour l'étape de régénération, qui est mise en oeuvre avec un déplacement de front. Les entrées et sorties de fluides sont donc décalées, en général simultanément, de façon synchrone après une séquence.

Dans tous ces systèmes, les auteurs prévoient une parfaite continuité de circulation de tous les fluides. Ces systèmes conduisent à un nombre très important de colonnes, la taille des colonnes étant définie par la séquence la plus petite du séquentiel.

Pour les procédés appliqués à l'hydrométallurgie, et notamment les procédés d'échange ionique comme c'est le cas dans WO 2007/087698, les étapes de production et de régénération sont systématiquement suivies d'étapes de rinçage. En procédé batch, les étapes sont le plus souvent réalisées au débit optimum par rapport à la cinétique de fixation ou de désorption. Ainsi les techniques actuelles ne permettent pas d'opérer un procédé de séparation à une grande échelle, qui soit économiquement avantageux, car nécessitant des quantités trop importantes de résine pour les colonnes et de produits de traitement. Cet inconvénient est d'autant plus vrai qu'aucun procédé mis en oeuvre actuellement ne permet d'effectuer la totalité du cycle de traitement en continu, notamment à l'étape de régénération des résines.

A cet inconvénient, vient s'ajouter le fait que toutes ces méthodes impliquent l'utilisation de quantités très importantes d'eau, dans des régions minières qui sont généralement situées dans des zones désertiques, ainsi que de quantités importantes de régénérant qui sont dans la plupart des cas fortement acide. S'ajoute alors aux problèmes d'ordre économique, des problèmes écologiques et de sauvegarde des ressources environnementales.

### RESUME DE L'INVENTION.

La présente invention se rapporte à un procédé à échelle industrielle qui optimise les quantités de régénérant, de résine et d'eau impliquées dans les cycles de séparation des dérivés métalliques ioniques présents dans des solutions de lixiviation, et qui permet ainsi d'offrir de meilleures capacités de traitement aux installations d'extraction minières. Le procédé selon l'invention est respectueux de l'environnement, permet l'obtention d'un rendement élevé de dérivés métalliques d'intérêts et est économiquement beaucoup plus avantageux que les procédés de l'art antérieur.

Ceci est notamment mis en oeuvre par un procédé de séparation sur résine par rétention sélective séquentiel multicolonnes pour séparer un dérivé métallique ionique à partir d'une solution de lixiviation contenant un dérivé métallique ionique, par passage de cette solution sur un lit fixe de résine sélective du métal considéré et comprenant au moins trois zones, des moyens d'écoulement de liquide étant disposés entre des zones adjacentes et entre la dernière et la première zone, ce procédé comprenant plusieurs séquences, chaque séquence comprenant au moins une étape choisie parmi une étape d'adsorption, une étape de rinçage, une étape de désorption, mise en oeuvre de façon simultanée ou non, chaque séquence suivante est effectuée par le déplacement des fronts dans les zones vers l'aval sensiblement d'un même incrément avant le déplacement périodique des points d'introduction et de soutirage.

Ce procédé peut comprendre une sous séquence sans injection de la charge.

Selon un autre aspect de l'invention, le procédé est caractérisé en ce qu'il comprend plusieurs séquences, chaque séquence comprenant au moins une des étapes suivantes :
(a) introduire un certain volume d'une solution de rinçage à l'entrée de la première zone et soutirer sensiblement simultanément le même volume d'un liquide dilué en ledit dérivé métallique ionique, au niveau d'un point situé en aval de cette zone;
(b) introduire un certain volume de ladite solution de lixiviation de charge à l'entrée de la deuxième zone et soutirer sensiblement simultanément le même volume d'un liquide riche en la ou les impuretés relativement moins retenue, au niveau d'un point situé en aval de cette zone;
(c) introduire un certain volume d'une solution de rinçage à l'entrée de la troisième zone et soutirer sensiblement simultanément le même volume d'un liquide dilué en régénérant, au niveau d'un point situé en aval de cette zone;
(d) optionnellement introduire un certain volume de dépolluant à l'entrée de la quatrième zone et soutirer sensiblement simultanément le même volume d'un liquide dilué, au niveau d'un point situé en aval de cette zone;
(e) introduire un certain volume d'un éluant à l'entrée de la cinquième zone et soutirer sensiblement simultanément le même volume d'un liquide riche en ledit dérivé métallique, au niveau d'un point situé en aval de cette zone;
les étapes (a), (b), (c), (d) et (e) pouvant être mises en oeuvre de façon simultanée ou non;
chaque séquence suivante étant effectuée par le déplacement périodique vers l'aval, sensiblement d'un même incrément de volume, des points d'introduction et de soutirage.

Selon un autre mode de réalisation de l'invention, le procédé est caractérisé en ce qu'il comprend plusieurs séquences, chaque séquence comprenant les étapes suivantes :
(a) introduire un certain volume d'une solution d'équilibrage à l'entrée de la première zone et soutirer sensiblement simultanément le même volume d'un liquide composé d'abord de solution de régénération puis de la solution d'équilibrage, au niveau d'un point situé en aval de cette zone;
(b) introduire un certain volume de la solution de lixiviation de charge à traiter contenant le dérivé métallique ionique à l'entrée de la deuxième zone et soutirer sensiblement simultanément le même volume d'un liquide contenant la ou les impuretés relativement moins retenue, au niveau d'un point situé en aval de cette zone;
(c) introduire un certain volume d'une solution de rinçage à l'entrée de la troisième zone et soutirer sensiblement simultanément le même volume d'un liquide dilué en la ou les impuretés relativement moins retenues que le dérivé métallique ionique, au niveau d'un point situé en aval de cette zone;
(d) introduire un certain volume de solution d'élution à l'entrée de la quatrième zone et soutirer sensiblement simultanément le même volume d'un liquide, contenant le dérivé métallique ionique, au niveau d'un point situé en aval de cette zone;
(e) introduire un certain volume d'une solution de régénération à l'entrée de la cinquième zone et soutirer sensiblement simultanément le même volume d'un liquide contenant les impuretés les plus retenues, au niveau d'un point situé en aval de cette zone;
les étapes (a), (b), (c), (d) et (e) pouvant être mises en oeuvre de façon simultanée ou non;
chaque séquence suivante étant effectuée par le déplacement périodique vers l'aval, sensiblement d'un même incrément de volume, des points d'introduction et de soutirage.

Selon un autre mode de réalisation de l'invention, le procédé est caractérisé en ce que les étapes (d), et (e) sont mise en oeuvre avec un même fluide, ces étapes correspondant alors à une étape consistant à:
(d) introduire un certain volume de régénérant à l'entrée de la quatrième zone et soutirer sensiblement simultanément le même volume d'un liquide riche en ledit dérivé métallique ionique, au niveau d'un point situé en aval de cette zone;
les quatrième et cinquième zones étant alors confondues en une seule quatrième zone.

Selon un autre mode de réalisation de l'invention, le procédé est caractérisé en ce que les étapes (a), (b), (c) et (d) sont mises en oeuvre au moins en partie simultanément.

Selon un autre mode de réalisation, le procédé est caractérisé en ce que ledit déplacement des fronts déplace les fronts de façon synchrone dans les différentes zones.

Selon un autre mode de réalisation, le procédé est caractérisé en ce que le déplacement des fronts comprend les étapes suivantes:
(i) créer une boucle de circulation entre les différentes zones, de la première zone à la dernière zone; et
(ii) mettre en circulation dans ladite boucle pour déplacer les fronts.

Selon un autre mode de réalisation de l'invention, le déplacement des fronts comprend les étapes suivantes:
(i) créer une première zone de déplacement par liaison fluide de la sortie de la première zone à l'entrée de la deuxième zone et par liaison fluide de la sortie de la deuxième zone à l'entrée de la troisième zone, et déplacement vers l'aval de l'entrée de la première zone pour fournir l'entrée de la première zone de déplacement et déplacement vers l'amont de la sortie de la troisième zone pour fournir la sortie de la première zone de déplacement; et
   créer une deuxième zone de déplacement par liaison fluide de la sortie de la troisième zone à l'entrée de la quatrième zone et par liaison fluide de la sortie de la quatrième zone à l'entrée de la cinquième zone et liaison fluide de la sortie de la cinquième zone à l'entrée de la première zone, et déplacement vers l'aval de l'entrée de la troisième zone pour fournir l'entrée de la deuxième zone de déplacement et déplacement vers l'amont de la sortie de la première zone pour fournir la sortie de la deuxième zone de déplacement; et
(ii) introduire un certain volume de solution de rinçage à l'entrée de la première zone de déplacement et soutirer sensiblement simultanément le même volume de solution de rinçage récupérée en sortie de la première zone de déplacement.
(iii) introduire un certain volume de solution de rinçage à l'entrée de la deuxième zone de déplacement et soutirer sensiblement simultanément le même volume de solution de rinçage récupérée en sortie de la deuxième zone de déplacement.

Selon un autre mode de réalisation de l'invention, le procédé est caractérisé en ce que ledit déplacement des fronts déplace les fronts de façon asynchrone dans les différentes zones.

Selon un autre mode de réalisation de l'invention, le procédé est caractérisé en ce que le déplacement des fronts comprend les étapes suivantes:
(i) créer une première zone d'un premier déplacement par liaison fluide de la sortie de la première zone à l'entrée de la deuxième zone et par liaison fluide de la sortie de la deuxième zone à l'entrée de la troisième zone; et
   créer une deuxième zone d'un premier déplacement par liaison fluide de la sortie de la troisième zone à l'entrée de la quatrième zone et par liaison fluide de la sortie de la quatrième zone à l'entrée de la cinquième zone et par liaison fluide de la sortie de la cinquième zone à l'entrée de la première zone; et
(ii) introduire un certain volume de ladite solution à l'entrée de la première zone de déplacement et soutirer sensiblement simultanément le même volume le même volume d'un liquide dilué en régénérant en sortie de la première zone d'un premier déplacement;
(iii) introduire un certain volume de régénérant à l'entrée de la deuxième zone de déplacement et soutirer sensiblement simultanément le même volume d'un liquide dilué en ledit dérivé métallique ionique en sortie de la deuxième zone d'un premier déplacement;
(iv) créer une première zone d'un second déplacement par liaison fluide de la sortie de la première zone à l'entrée de la deuxième zone et par liaison fluide de la sortie de la deuxième zone à l'entrée de la troisième zone, et déplacement vers l'aval de l'entrée de la première zone pour fournir l'entrée de la première zone d'un second déplacement et déplacement vers l'amont de la sortie de la troisième zone pour fournir la sortir de la première zone d'un second déplacement; et
   créer une deuxième zone d'un second déplacement par liaison fluide de la sortie de la troisième zone à l'entrée de la quatrième zone et par liaison fluide de la sortie de la quatrième zone à l'entrée de la cinquième zone et liaison fluide de la sortie de la cinquième zone à l'entrée de la première zone, et déplacement vers l'aval de l'entrée de la troisième zone pour fournir l'entrée de la deuxième zone de déplacement et déplacement vers l'amont de la sortie de la première zone pour fournir la sortie de la deuxième zone de déplacement; et
(vi) introduire un certain volume de solution de rinçage à l'entrée de la première zone d'un second déplacement et soutirer sensiblement simultanément le même volume d'un liquide riche en la ou les impuretés relativement moins retenue en sortie de la première zone d'un second déplacement.
(vii) introduire un certain volume de solution de rinçage à l'entrée de la deuxième zone d'un second déplacement et soutirer sensiblement simultanément le même volume d'un liquide riche en ledit dérivé métallique ionique en sortie de la deuxième zone d'un second déplacement.

Selon un autre mode de réalisation de l'invention, le procédé est caractérisé en ce que l'étape de déplacement des fronts comprend un déplacement des fronts dans toutes les zones avant le déplacement périodique.

Selon un autre mode de réalisation de l'invention, le procédé est caractérisé en ce que le déplacement périodique des points d'injection est effectué d'une colonne en une colonne.

Selon un autre mode de réalisation de l'invention, le procédé est caractérisé en ce que le déplacement périodique des points d'injection est effectué de deux colonnes en deux colonnes.

Selon un autre mode de réalisation de l'invention, le procédé est caractérisé en ce que les lesdites zones comprennent au moins une colonne, de préférence au moins deux colonnes.

Selon un autre mode de réalisation de l'invention, le procédé est caractérisé en ce que l'incrément de volume suivant lequel sont déplacés lesdits points d'introduction et lesdits points de soutirage correspond sensiblement au volume d'une fraction entière d'une zone de matière absorbante.

Selon un autre mode de réalisation de l'invention, le procédé est caractérisé en ce que l'incrément de volume suivant lequel sont déplacés lesdits points d'introduction et lesdits points de soutirage correspond sensiblement au volume d'une colonne.

Selon un autre mode de réalisation de l'invention, les colonnes sont munies de vannes multivoies.

Selon un autre mode de réalisation de l'invention, le procédé est caractérisé en ce que le déplacement périodique des étapes est synchrone.

Selon un autre mode de réalisation de l'invention, le procédé est caractérisé en ce que le déplacement périodique des étapes est asynchrone.

Selon un autre mode de réalisation de l'invention, le procédé est caractérisé en ce que ledit liquide dilué en ledit dérivé métallique ionique est au moins en partie envoyé vers l'étape (b).

Selon un autre mode de réalisation de l'invention, le procédé est caractérisé en ce qu'il existe une zone supplémentaire, et en ce qu'il comprend en outre une étape (g) introduire tout ou partie du liquide dilué en ledit dérivé métallique ionique obtenu à l'étape (a) au niveau de ladite zone supplémentaire, et récupérer sensiblement le même volume en solution de rinçage au niveau d'un point situé en aval de cette zone.

Selon un autre mode de réalisation de l'invention, le procédé est caractérisé en ce que l'étape (b) comprend deux sous-étapes (b1) et (b2), ainsi qu'une étape intermédiaire d'ajustement d'un paramètre de la solution, notamment par modification du pH.

Selon un autre mode de réalisation de l'invention, le procédé est caractérisé en ce que ledit liquide dilué en régénérant obtenu à l'étape (c) est au moins en partie envoyé vers l'étape (d), éventuellement après avoir été complété.

Selon un autre mode de réalisation de l'invention, le procédé est caractérisé en ce que les solutions de rinçage récupérées sont au moins en partie renvoyées vers les étapes (a) et/ou (c).

Selon un autre mode de réalisation, le procédé selon l'invention comprend au moins 3 colonnes et 4 lignes de fluides.

Selon un autre mode de réalisation de l'invention, le procédé est caractérisé en ce que la chromatographie est du type échange d'ions et le dérivé métallique ionique est un sel sélectionné parmi les complexes de l'uranium, de l'or, du cuivre, du zinc du nickel, du cobalt, ainsi que des PGM, de préférence un sel d'uranium et en particulier un sulfate d'uranium.

Selon un mode de réalisation préféré, l'étape de régénération comprend une étape de dépollution avec une base forte par exemple du type hydroxyde de potassium ou de sodium , suivie optionnellement d'une étape de rinçage avec de l'eau puis une étape de reconditionnement de la résine avec un acide par exemple l'acide sulfurique.

Selon un autre mode de réalisation de l'invention, le procédé est caractérisé en ce que l'éluant est l'acide sulfurique.

Enfin l'invention se rapporte à un dispositif de dépollution pour la mise en oeuvre du procédé selon l'invention.

### BREVE DESCRIPTION DES FIGURES.

- La figure 1 est une représentation schématique d'un mode de réalisation en SMB selon l'état de la technique;
- La figure 2 est une représentation schématique d'une colonne dans son environnement dans une installation selon un mode de réalisation de l'invention.
- La figure 3 est une représentation schématique d'un premier mode de réalisation;
- La figure 4 est une représentation schématique d'un second mode de réalisation;
- La figure 5 est une représentation schématique d'un troisième mode de réalisation;
- La figure 6 est une représentation schématique d'un quatrième mode de réalisation;
- La figure 7 est une représentation schématique d'un mode de réalisation en SMB selon l'état de la technique;

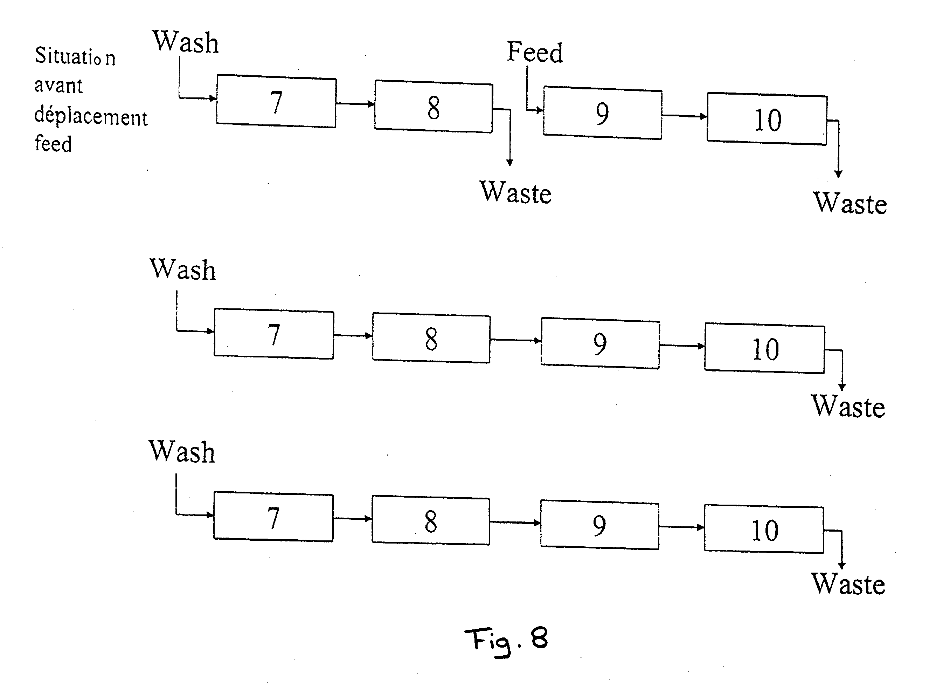

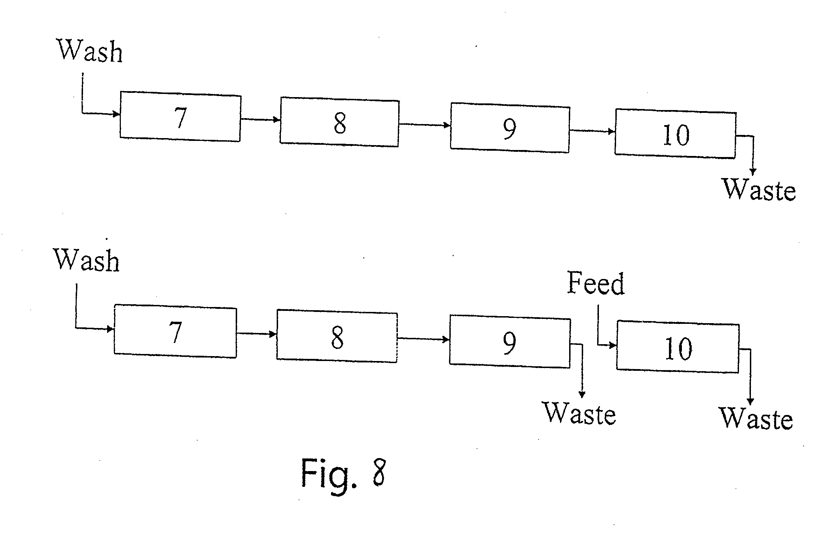

- La figure 8 est une représentation schématique d'un déplacement des fronts correspondant à une séquence de transition selon l'invention selon un mode de réalisation;

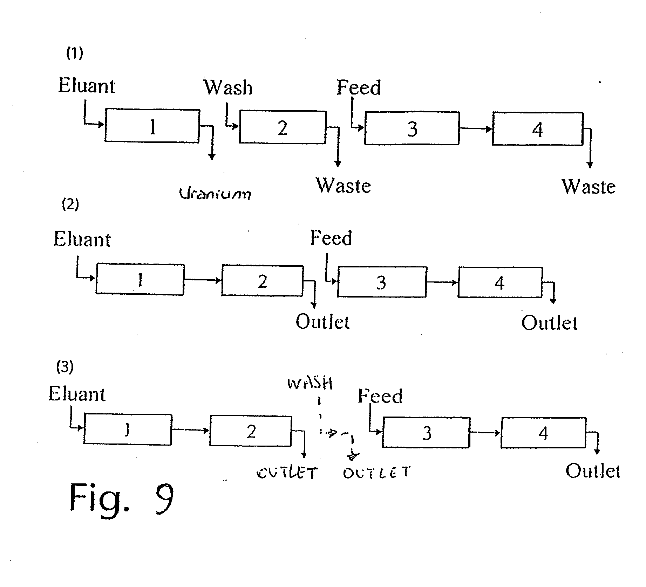

- La figure 9 est une représentation schématique d'un déplacement asynchrone d'une ligne d'injection de rinçage selon l'invention selon un autre mode de réalisation;

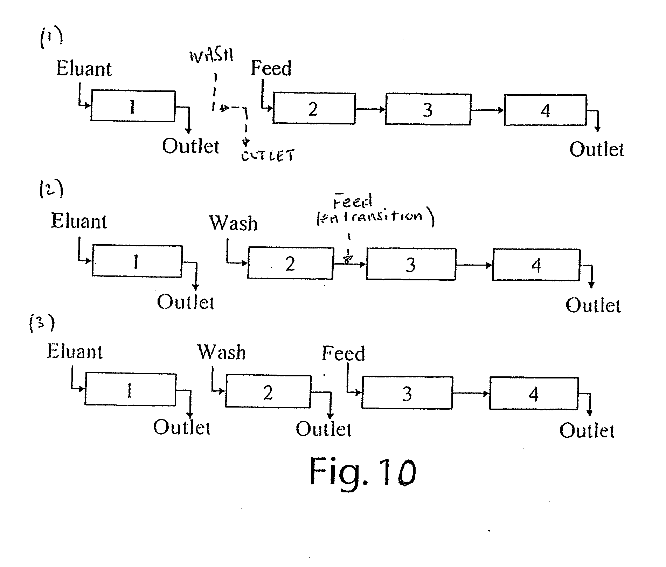

- La figure 10 est une représentation schématique d'un déplacement asynchrone de la ligne de charge avec une séquence de transition selon l'invention selon un autre mode de réalisation;
- La figure 11 représente un procédé selon l'invention avec 6 lignes de fluides.
- La figure 12 représente les différentes séquences d'un procédé selon l'invention mis en oeuvre avec 5 fluides ;
- La figure 13 représente un procédé selon l'invention.

Dans ces figures, les symboles suivants sont utilisés:
- W: eau
- FD: dérivé métallique ionique dilué
- F: solution de lixiviation contenant le dérivé métallique ionique - solution de charge ou « feed » contenant les espèces métalliques désirées )
- RAF: raffinat
- RD: solution de régénération diluée
- R: régénérant
- EXT: extrait
- displ: déplacement des espèces
- Ads: adsorption
- Pre ads .: préadsorption
- Water displ.: déplacement à l'eau (rincage)
- Water: eau
- H₂SO₄ displ.: déplacement à l'eau (régénération)
- Spare: en attente
- Wash: lavage
- Rege: régénération
- Wash neutral: lavage neutre
- Acidified water: eau acide
- Waste: effluent
- Step time: durée de la séquence
- Step: séquence

### DESCRITION DETAILLEE DE MODES DE REALISATION DE L'INVENTION.

Selon la présente invention, on entend par dérivé métallique ionique tout type de complexes métalliques ionisés notamment et de façon non limitative, les complexes formés par l'uranium et l'or ainsi que ceux obtenus lors de l'extraction du cuivre, zinc, nickel, cobalt, ainsi que des PMG (Platinum Group Metals). De manière préférée, le dérivé métallique est un complexe formé par l'uranium, et de façon encore plus préférée un sulfate d'uranium. Le contre ion peut être un sulfate, carbonate ou autre. En solution sulfurique notamment, l'uranium (IV) existe principalement sous forme de cations uranyle UO²⁺₂ mais aussi sous forme de complexe sulfate UO₂SO₄, UO₂(SO₄)²⁻₂ etc Dans l'exposé ci après, l'exemple de l'uranium sera utilisé pour représenter les dérivés métalliques ioniques sans pour autant limiter le champ de l'invention à ce seul produit.

Selon la présente invention, on entend par solution de lixiviation, toute solution issue de procédés d'extraction hydrométallurgiques, contenant en solution ou en suspension des dérivés métalliques sous leur forme ionique tels que définis précédemment. Les compositions de lixiviation dépendent naturellement de la nature géologique du minerai exploité. Ainsi à titre d'exemple, un solution de lixiviation d'un minerai d'uranium contient environ 100 à 500, par exemple environ 350 ppm d'uranium, de la silice à hauteur de environ 200 à 1000, par exemple environ 500 ppm, du fer, à hauteur environ de 500 à 20000, par exemple environ 1000 ppm, pour les espèces présentes en majorité, ainsi que d'autres composés tels que le vanadium. Une solution de lixiviation d'un minerai de cuivre, contient de 1 à 5g/L, par exemple environ 3g/L de cuivre, de 3 à 10g/L, par exemple environ 6 g/L de fer, de 100 à 1000ppm, par exemple environ 400 ppm de silice ainsi que d'autres impuretés telles que l'aluminium ou me manganèse.

En effet, outre le vanadium pour l'uranium ou le fer pour le cuivre, parmi les contaminants les plus typiques, sont ceux provenant de la gangue et en particulier les silicates. Ces impuretés peuvent interférer avec les techniques d'extraction de l'espèce d'intérêt, en ayant tendance à se fixer sur la résine et limitant de ce fait leur capacité d'échange.

Selon l'invention, le dérivé métallique ionique peut être le plus retenu par la phase stationnaire mais aussi le moins retenu par la phase stationnaire. On citera à titre d'exemple que lorsqu'on utilise le procédé d'adsorption selon l'invention pour la séparation d'espèces telles que l'uranium, les impuretés sont les plus retenues par la phase stationnaire et le dérivé métallique ionique est le moins retenu.

Selon la présente invention on entend par étape d'adsorption une étape au cours de laquelle on injecte de la charge contenant le dérivé métallique ionique à séparer, un ou plusieurs des produits contenus dans la charge vont alors se fixer sur la phase solide. Cette étape correspond à un chargement de la phase.

Selon la présente invention on entend par étape de désorption une étape au cours de laquelle le ou les produits qui sont fixés sur le support solide passe dans la phase liquide. Un procédé d'adsorption comprend donc de façon naturelle au moins une étape d'adsorption et au moins une étape de désorption.

Selon la présente invention, on entend par étape de rinçage une étape entre une étape d'adsorption et de désorption ou inversement permettant de renouveler la phase liquide contenue dans la ou les colonnes. La dénomination étape de lavage peut également correspondre à cette étape.

Le procédé de l'invention permet une meilleure optimisation des séquences de chargement de la solution de lixiviation à traiter et de rinçage des produits séparés ; ceci conduit à une réduction des volumes utilisés et à une moindre production de sous-produits.

Par ailleurs, le procédé selon l'invention offre encore un ou plusieurs des avantages suivants:
- design mécanique qui permet d'éviter les pièces en mouvement, puisque les colonnes sont fixes. Les colonnes sont compactes et il est possible d'utiliser des vannes multivoies sur chaque colonne.
- maintenance simplifiée, car on peut avoir une colonne qui est séparée du cycle sans avoir à stopper le procédé, pour changement de la résine ou support chromatographique, maintenance générale, etc... Les exigences de maintenance se rapprochent de celles d'un procédé discontinu, connues pour être relativement peu élevées.
- le contrôle de procédé est simple, puisqu'il suffit de changer les paramètres de l'automate pour modifier le procédé et ajuster les zones du procédé (aucune pièce mécanique n'est à changer). Il est en outre possible d'utiliser un débitmètre sur chaque colonne, pour chaque étape de procédé.
- les extensions de capacité sont faciles à mettre en oeuvre, en additionnant simplement des colonnes aux colonnes existantes et en modifiant les paramètres de procédé pour modifier les zones.

Ces avantages, ainsi que d'autres, seront explicités le cas échéant dans la description qui suit.

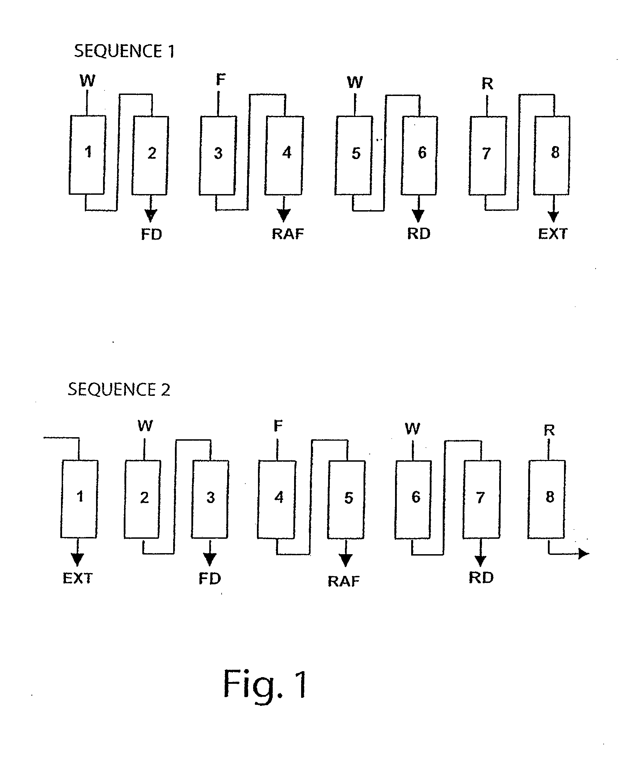

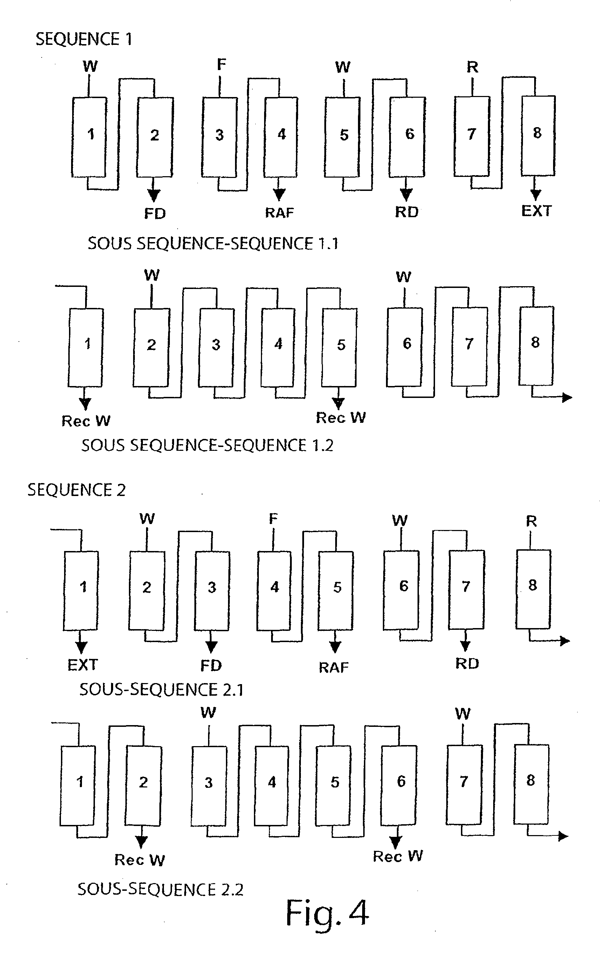

Pour les figures 1, 3 à 6, la description est donnée en référence à un sel (sulfate) d'uranium, mais il est entendu que le procédé selon l'invention s'applique à tous les dérivés métalliques ioniques et s'applique à tout type de chromatographie bien connu de l'homme du métier.

Pour mémoire, on rappellera que le dérivé métallique ionique est considérée, pour l'échange ionique, comme l'extrait (X) car il est plus échangé et que les impuretés moins échangées sont considérées comme un raffinat (R). On utilisera les mêmes conventions pour les autres exemples dans la présente demande, le terme "plus retenu" ou "moins retenu" étant utilisé lors qu'il n'y a pas d'échange ionique.

Les résines échangeuses d'ions sont classiques, de même que les solutions de rinçage et de régénération. Dans le cas présent et pour les composés métalliques sous forme anionique on utilisera des résines anioniques fortes de type I ou de type II (polymère de polystyrène et divinylbenzène portant des groupements amines quaternaires, tel que l'Amberjet 4400 Cl ™, Amberlite 920U Cl ™, Dowex 21 K™) ou des résines anioniques faibles. Dans le cas de composés métalliques sous forme cationique on utilisera des résines cationiques fortes (polymère de polystyrène et divinylbenzène portant des groupements sulfoniques, tel que l'Amberlite IR252 ™) ou faibles. Dans certains cas des résines sélectives (polymère de polystyrène et divinylbenzène portant des groupements chélatants spécifiques) seront mis en oeuvre. Ces différentes résines seront soit de type gel ou macro réticulé possédant une distribution granulométrique appropriée (Coefficient d'uniformité proche de 1.1 ; taille effective 0,3 à 1,6 mm)

De ce point de vue, l'invention ne se démarque pas de l'état de la technique des échanges ioniques. On peut utiliser des résines anioniques ou cationiques, faibles ou fortes, selon le cas à traiter.

On peut aussi utiliser plusieurs systèmes en série; notamment on peut effectuer une déminéralisation par utilisation d'un premier système avec des résines cationiques suivi d'un deuxième système avec des résines anioniques.

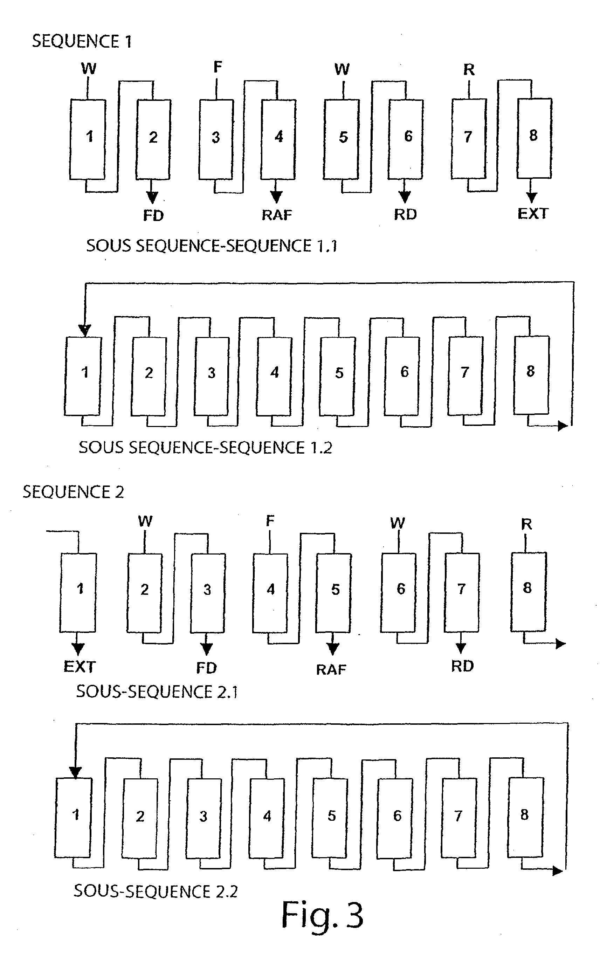

La présente invention est illustrée à titre d'exemple par la description ci-après de trois modes de réalisation, faite en référence aux figures 3 à 5 des dessins annexés, tandis que la figure 1 décrit un mode de réalisation selon l'état de la technique. Le sel d'uranium est pris comme un exemple représentatif des dérivés métalliques ioniques représentatif d'une substance à purifier dans un procédé de chromatographie par échange ionique.

En référence à la figure 1, l'installation comprend huit colonnes 1, 2, 3, 4, 5, 6, 7 et 8 garnies de résine échangeuse d'ions. Le fonctionnement de cette installation de type SMB selon l'état de la technique est expliqué infra. Il convient de garder à l'esprit que les étapes de décalage vont de la gauche vers la droite, ceci correspond en fait à un déplacement des colonnes de la droite vers la gauche.

L'étape (a) comprend les actes visant à introduire un certain volume d'eau W à l'entrée de la colonne 1 et soutirer sensiblement simultanément le même volume de sel métallique dilué en sortie de la colonne 2, les colonnes 1 et 2 formant la première zone. Lors de l'introduction de l'eau, au tout début de la phase, il convient de garder à l'esprit que du fait du décalage, la colonne 1 est donc en fait la colonne 2 juste précédemment (avant le décalage). La colonne 2 juste précédemment est remplie de la solution de sel d'uranium diluée (celle qui n'a pas été fixée par échange ionique). Le front d'eau pure se déplace donc vers le bas, et la colonne 1 passe donc d'un état "sel d'uranium dilué" (étant entendu qu'il y a du sel d'uranium échangé dans cette colonne) à un état "eau" (avec du sel d'uranium échangé dans cette colonne). La colonne 2, qui est la colonne 3 juste précédemment, passe d'un état "sel d'uranium" (avec d'uranium échangé fixé) à un état "sel d'uranium dilué" (avec de l'uranium échangé fixé), et on récupère de la solution de lixiviation de dérivé métallique ionique à purifier à l'état dilué en pied de la colonne 2, d'abord relativement concentrée puis de plus en plus diluée. En effet sur cette colonne il n'y a plus de sites d'échange disponibles et donc la solution diluée élue simplement le long de cette colonne; il s'agit d'un déplacement de solution d'uranium. Cette solution diluée récupérée est typiquement renvoyée vers le tank de départ de la solution à purifier, ou alors directement en tête de la colonne 3.

L'étape (b) comprend les actes visant à introduire un certain volume de ladite solution de lixiviation à l'entrée de la colonne 3 et soutirer sensiblement simultanément le même volume d'un liquide riche en raffinat à la sortie de la colonne 4. La colonne 3 est alimentée en solution de lixiviation, mais cette colonne correspond à la colonne 4 immédiatement avant, donc à une colonne déjà échangée partiellement en sel d'uranium, et contenant aussi du sel d'uranium diluée qui n'a pas été échangé. De même, la colonne 4 correspond à la colonne 5, mais immédiatement précédemment et donc une colonne avec de l'eau. La colonne 4 est une colonne de préadsorption puisqu'elle reçoit une solution de sel d'uranium épuisée par la colonne 3. Dans la colonne 3, la solution de sel d'uranium est injectée et un front de saturation progresse dans la colonne 3, tandis que le front de la solution de lixiviation et qui s'échange sur les sites progresse dans la colonne 4 (colonne de préadsorption). A la sortie de la colonne 4, on récupère le raffinat, à savoir les éléments de la solution à traiter qui n'ont pas été échangés avec la résine, en partant d'une solution très diluée vers une solution plus concentrée en raffinat.

L'étape (c) comprend les actes visant à introduire un certain volume d'eau à l'entrée de la colonne 5 et soutirer sensiblement simultanément le même volume d'un liquide dilué en régénérant à la sortie de la colonne 6. La colonne 5 est alimentée avec de l'eau, tandis que de la colonne 6 sort du régénérant dilué. En effet, la colonne 6 est la colonne 7 juste avant le décalage et donc juste après le décalage elle reçoit ce qui sort de la colonne 5, à savoir de l'eau avec un peu de régénérant. Ce qui sort de la colonne 6 est donc du régénérant dilué.

L'étape (d) comprend les actes visant à introduire un certain volume de régénérant à l'entrée de la colonne 7 et soutirer sensiblement simultanément le même volume d'un liquide riche en le sel métallique à la sortie de la colonne 8. La colonne 7 est alimentée en régénérant, et est reliée à la colonne 8. Cette colonne 8 est la colonne 1 juste avant le décalage et donc juste après le décalage on alimente la colonne 8 avec du régénérant ce qui fait que le front de régénérant progresse dans la colonne 8, et on récupère l'extrait alors en pied de la colonne 8, d'abord dilué puis de plus en plus concentré et lorsque la quantité récupérée commence à diminuer on décale les étapes.

A la fin d'une séquence donnée N, on a donc en tête de la colonne 1 de l'eau et du sel d'uranium échangé fixé sur la résine. En tête de la colonne 2 on a du sel d'uranium échangé, de l'eau et un reste de solution de sel d'uranium à purifier. En tête de la colonne 3 on a du sel d'uranium complètement échangé, avec de la solution de lixiviation à purifier. En tête de la colonne 4, on a partiellement du sel d'uranium échangé (tous les sites ne sont pas échangés) et du raffinat (partie de la solution de lixiviation à purifier qui ne s'est pas fixée) et un reste de solution de lixiviation à purifier. En tête de la colonne 5, on a de l'eau de rinçage et les sites de la résine prêts à échanger. En tête de la colonne 6, on a de l'eau de rinçage diluée avec du régénérant, les sites étant régénérés. En tête de la colonne 7, on a des sites complètement régénérés (prêts à échanger du sel d'uranium) et de la solution de régénération. En tête de la colonne 8, on a des sites partiellement régénérés et de la solution de régénération diluée et de l'extrait (partiellement).

Donc au tout début de la séquence suivant N+1, et en référence à un schéma dans lequel les colonnes sont déplacées vers la gauche par déplacement des points d'injection et de soutirage vers la droite, on a alors les positions suivantes. De l'eau est envoyée sur la colonne 2 qui présente en tête du sel d'uranium échangé, de l'eau et un reste de solution de lixiviation à purifier. En tête de la colonne 3 on a du sel d'uranium complètement échangé, avec de la solution de lixiviation à purifier, qui va recevoir alors ce qui sort de la colonne 2, En tête de la colonne 4, on a partiellement du sel d'uranium échangée (tous les sites ne sont pas échangés) et du raffinat (partie de la solution de sel d'uranium à purifier qui ne s'est pas fixé) et un reste de solution de lixiviation à purifier, et cette colonne reçoit alors la solution de lixiviation à purifier. En tête de la colonne 5, on a de l'eau de rinçage et les sites de la résine prêts à échanger, et qui reçoit ce qui sort de la colonne 4, à savoir du raffinat et de la solution de sel d'uranium appauvrie qui va s'échanger sur cette colonne de préadsorption. En tête de la colonne 6, on alimente de l'eau de rinçage sur une colonne ayant des sites régénérés, et contenant de la solution de régénérant diluée. La colonne 7 qui a aussi des sites complètement régénérés (prêts à échanger du sel d'uranium) reçoit alors de l'eau de la colonne 6 et de la solution de régénération diluée qui est soutirée en pied. En tête de la colonne 8, on des sites partiellement régénérés et de la solution de régénération diluée, et on alimente avec une solution de régénérant.

Les flux qui vont venir en tête des colonnes seront donc les suivants. En tête de la colonne 2 la solution de lixiviation vient sur une colonne ayant en tête déjà du sel d'uranium partiellement échangé. Il y a donc une rupture des fronts et un gradient qui n'est pas respecté. En tête de la colonne 8 la solution de régénération vient sur une colonne partiellement régénérée avec du régénérant dilué, et donc on procède localement à un mélange de régénérant pur avec du régénérant impur. A nouveau on ne respecte pas le gradient.

On voit donc que le système de SMB classique, appliqué au domaine des résines échangeuses d'ions, s'il présente l'avantage d'être continu n'en est pas moins exempt de défauts, qui sont surtout sensibles au niveau de la régénération.

L'invention permet grâce à une étape de déplacement des fronts dans les zones avant le déplacement périodique, de s'affranchir de ce problème et de respecter les gradients. L'étape de déplacement des fronts se fait typiquement d'une colonne. La description qui suit fait référence à trois modes de réalisation. Le déplacement des fronts se fait par injection d'un fluide choisi dans les colonnes, soit les fluides existant par mise en circulation en boucle fermée, par injection d'eau (le liquide de rinçage) ou par injection de charge et de régénérant suivie d'injection d'eau.

Dans les figures 3, 4 et 5, l'installation est identique en termes de colonnes, seule diffère le mode opératoire des colonnes, et la présence éventuelle de bacs intermédiaires (non représentés).

L'installation comprend des colonnes (1, 2, 3, 4, 5, 6, 7 et 8) garnies de la même quantité d'une des résines convenant à la présente invention et tel que définie précédemment.

Ces colonnes sont disposées en série, chacune comportant une entrée et une sortie. De façon générale, comme il apparaîtra plus bas, chaque entrée peut recevoir la solution aqueuse à traiter, la solution de régénération, de l'eau, de l'eau récupérée, du sel d'uranium acidifié, de l'acide sulfurique. De façon générale, comme il apparaîtra plus bas, chaque sortie peut produire le sel d'uranium dilué, le raffinat, l'extrait, l'eau récupérée, de l'acide sulfurique dilué, du sel d'uranium (extrait). Chaque colonne est reliée en outre à la colonne en amont et en aval.

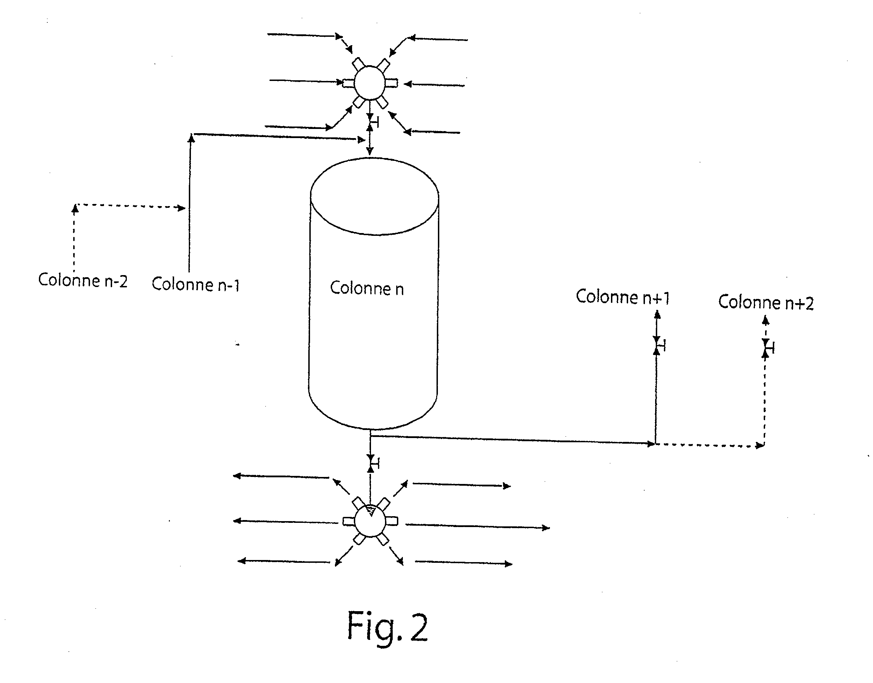

Ce principe est représenté à la figure 2. Comme il est représenté à la figure 2, les vannes peuvent être des vannes multivoies, notamment à 6 voies. Ces vannes multivoies sont connues en elles-mêmes, et sont commandées de façon classique par un moteur électrique. De façon avantageuse, les vannes sont actionnées pour tourner d'un incrément à chaque fois dans un mode d'exploitation. Pour certains modes, on peut actionner les vannes pour les faire tourner de plusieurs secteurs, comme par exemple quand on souhaite isoler une colonne pour procéder à une séquence spécifique sur cette colonne.

En référence au premier mode de réalisation illustré à la figure 3, après la séquence N, identifié par séquence 1.1 sur la figure, on a la disposition décrite ci-dessus en référence au système SMB.

Puis on procède à un déplacement des fronts lors de la séquence 1.2. Ce déplacement est obtenu par mise en boucle des colonnes et mise en circulation.

Ce déplacement est effectué d'un incrément d'une colonne, par mise en circulation des fluides dans la boucle. Le volume déplacé correspond au volume d'une colonne.

On obtient donc au début de la séquence N+1 les colonnes suivantes. La colonne 4 présente donc en tête des sites partiellement échangés et en terme de fluide ce qui était en tête de la colonne 3 (les sites déjà échangés ne changent pas), donc de la solution de lixiviation à purifier (donc une composition sensiblement identique à ce que la colonne va recevoir ensuite). La colonne 8 présente alors des sites partiellement régénérés et de la solution de régénérant (donc une composition sensiblement identique à ce que la colonne va recevoir ensuite). Ainsi l'alimentation des colonnes se fait avec un gradient constant, puisque les concentrations ne changent pas en tête de ces colonnes. Ceci est vrai aussi pour les autres colonnes. La colonne 6 présente en tête ce qui était en tête de la colonne 5, à savoir de l'eau, et va recevoir aussi de l'eau. La colonne 2 présente en tête ce qui était en tête de la colonne 1, à savoir de l'eau, et va recevoir aussi de l'eau.

En référence au second mode de réalisation illustré à la figure 3, après la séquence N, identifié par séquence 1.1 sur la figure, on a la disposition décrite ci-dessus en référence au système SMB.

Puis on procède à un déplacement des fronts lors de la séquence 1.2. Ce déplacement est obtenu par mise en circulation de deux zones de déplacement. La première zone de déplacement est la zone comprenant les colonnes 2, 3, 4 et 5. La deuxième zone de déplacement est la zone comprenant les colonnes 6, 7, 8 et 1.

Ce déplacement est effectué d'un incrément d'une colonne, par injection d'eau en tête des zones de déplacement. Le volume déplacé correspond au volume d'une colonne.

On obtient donc au début de la séquence N+1 les colonnes comme dans le premier mode de réalisation. La différence vient du déplacement d'un volume de colonne d'eau. En effet, entre les deux parties du procédé production/régénération, il y a un tampon d'eau pour éviter la contamination des différentes espèces. Ce tampon d'eau est simplement déplacé dans le premier mode de réalisation, tandis qu'il est remplacé dans le second mode de réalisation. Dans le second mode de réalisation, on récupère alors en pied des colonnes 1 et 5 le volume d'eau dans une colonne, donc de l'eau récupérée (Rec W). Cette eau récupérée est envoyée vers un bassin intermédiaire, et peut servir à alimenter les colonnes en eau de rinçage. On peut aussi utiliser cette eau en partie avec de l'eau fraîche pour le rinçage. Les autres séquences sont celles comme dans le premier mode de réalisation.

Dans les premier et second modes de réalisation, le déplacement des fronts est synchrone, puisque tous les fronts se déplacent en même temps d'un incrément de volume. Les fronts entrants se déplacent de façon synchrone avec les fronts sortants.

Dans les premier et second modes de réalisation, la sous-séquence sans injection de la charge correspond à la sous-séquence 1.2 (ou 2.2, selon la séquence considérée).

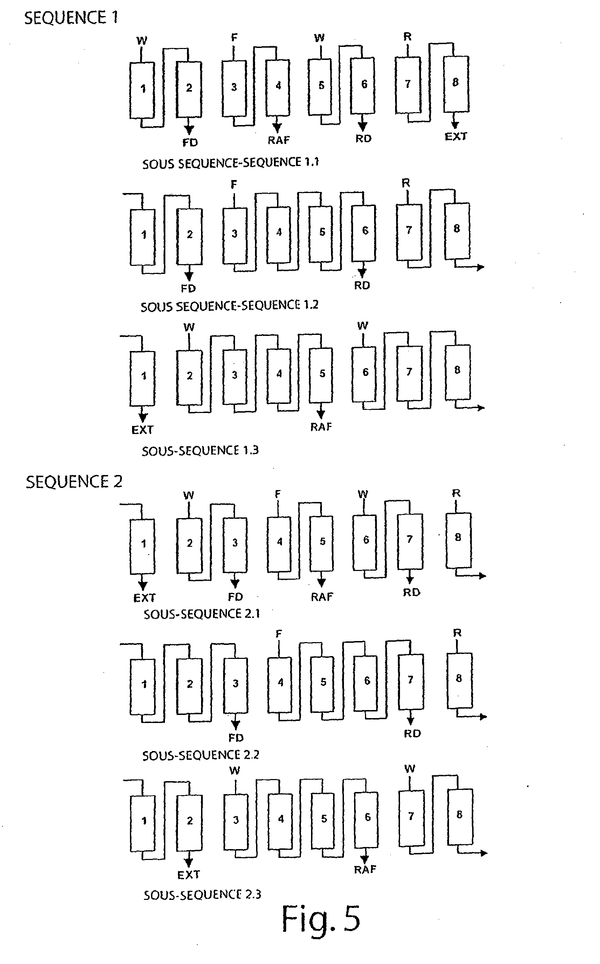

En référence au troisième mode de réalisation illustré à la figure 5, après la séquence N, identifié par séquence 1.1 sur la figure, on a la disposition décrite ci-dessus en référence au système SMB.

Puis on procède à un premier déplacement des fronts lors de la séquence 1.2. Ce premier déplacement est obtenu par mise en circulation de deux zones de premier déplacement. La première zone de premier déplacement est la zone comprenant les colonnes 3, 4, 5 et 6. La deuxième zone de premier déplacement est la zone comprenant les colonnes 7, 8, 1 et 2. On injecte de la solution de sel d'uranium dans la colonne 3, ce qui provoque un premier déplacement dans la première zone. La colonne 4 a alors en tête une solution de lixiviation à purifier. Le contenu de la colonne 6 est récupéré en pied, il s'agit de régénérant dilué. On injecte du régénérant dans la colonne 7, ce qui provoque un premier déplacement dans la deuxième zone. La colonne 8 a alors en tête une solution de régénérant.

Puis on procède à un second déplacement des fronts lors de la séquence 1.3. Ce second déplacement est obtenu par mise en circulation de deux zones de second déplacement. La première zone de second déplacement est la zone comprenant les colonnes 2, 3, 4 et 5. La deuxième zone de second déplacement est la zone comprenant les colonnes 6, 7, 8 et 1. On injecte cette fois de l'eau dans les colonnes 2 et 6. On provoque alors un second déplacement des fronts. La composition de la tête de la colonne 3 se retrouve en tête de la colonne 4; il s'agit à nouveau de solution de lixiviation à purifier. De ce point de vue, la composition de la tête de colonne 4 n'a pas changé au cours de ce second déplacement. De même, au niveau de la colonne 8 on obtient la composition de la tête de la colonne 7, à savoir du régénérant. De ce point de vue encore, la composition de la tête de colonne 8 n'a pas varié. Ce qui a varié au cours de ce second déplacement ce sont les compositions dans les colonnes 5 et 1, puisqu'on a obtenu du raffinat en pied de la colonne 5 et de l'extrait en pied de la colonne 1. Lors de ce second déplacement, on a reconstitué le "tampon" d'eau entre les deux parties du procédé production/régénération pour éviter la contamination des différentes espèces.

Dans le troisième mode de réalisation, le déplacement des fronts est asynchrone, puisque tous les fronts entrants ne se déplacent pas de façon synchrone avec les fronts sortants. Dans l'exemple, les fronts entrants sont d'abord déplacés puis les fronts sortants sont déplacés, mais il est aussi possible de faire l'inverse.

Dans le troisième mode de réalisation, la sous-séquence sans injection de la charge correspond à la sous-séquence 1.3 (ou 2.3, selon la séquence considérée).

Le nombre de colonnes dans une zone de déplacement ou dans une zone correspondant aux zones (a), (b), (c) et (d) n'est pas nécessairement constant. Une variation du nombre de colonnes dans chaque zone peut être bénéfique pour tirer parti au maximum de chaque colonne. A titre d'exemple, il est possible d'avoir un premier ensemble de colonnes en élution (colonnes de déplacement) dont le nombre est contant, tandis que les zones de production et de régénération ont des longueurs variables, par exemple deux colonnes en production et une colonne en régénération puis une colonne en production et deux colonnes en régénération. A titre d'exemple encore, si on considère un ensemble de M colonnes, on peut avoir une séquence complète (ensemble de toutes les séquences (a), (b), (c), (d) et de déplacement) sur M-1 ou M-2 colonnes ou M-m colonnes. On peut alors isoler une, deux ou m colonnes, par exemple pour maintenance, sur le lit de résine ou sur les ensembles vannes et conduits attachés à cette colonne.

En fait, le procédé selon l'invention permet de mettre en oeuvre une étape choisie sur une colonne choisie, de façon indépendante des autres colonnes, si besoin est. Ceci est impossible avec les procédés continus de l'état de la technique. Par exemple, comme indiqué, on peut isoler une colonne. On peut aussi, à l'intérieure d'une séquence donnée, changer l'alimentation d'une colonne. Lorsqu'une colonne reçoit de l'eau, on peut dans un premier temps utiliser de l'eau récupérée et envoyer sur cette colonne ensuite de l'eau fraîche, ce qui permet d'optimiser la consommation d'eau. On peut aussi alimenter une colonne avec des charges variables ou des solutions de régénération variables. Par rapport aux procédés selon l'état de la technique, on peut mieux jouer sur les débits de rinçage et de production. En particulier, ces procédés de l'état de la technique prévoient de diluer en continu l'alimentation par les eaux de rinçage. Cela conduit entre autre à augmenter la vitesse de passage dans la zone d'adsorption (échange ionique). Les conditions hydrauliques optimums pour chaque étape du séquentiel ne sont donc pas respectées dans les procédés continus de l'état de la technique. L'invention permet de mieux tirer parti des conditions hydrauliques optimum, en gérant au mieux chaque étape, puisque la durée des étapes (a), (b), (c) et (d) n'est pas nécessairement la même. Les écoulements sont donc optimisés dans chaque colonne.

Le procédé peut être optimisé pour obtenir des fluides d'alimentation de colonnes optimisés, en complétant les fluides sortants des colonnes pour réemploi dans les colonnes suivantes.

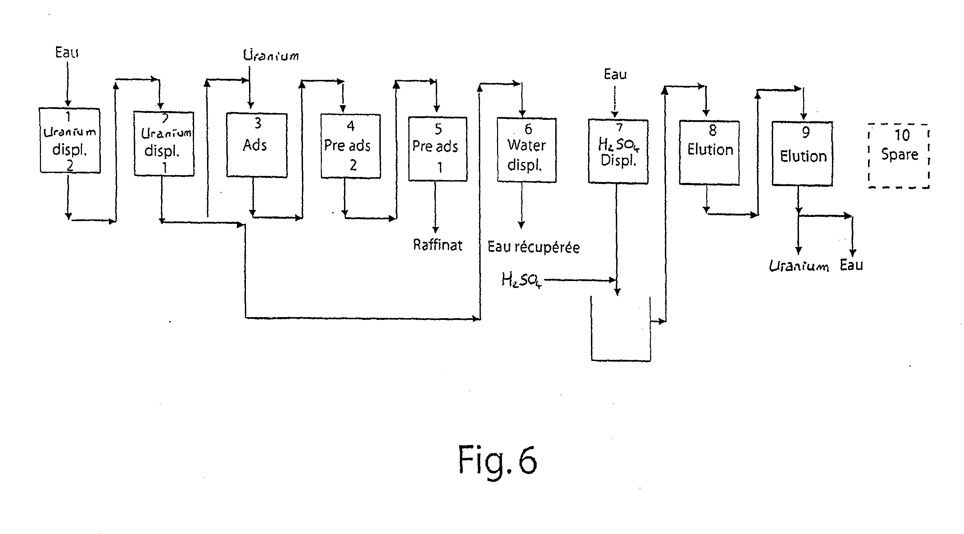

Il est aussi possible d'avoir d'autres colonnes de déplacement, notamment une colonne de déplacement supplémentaire au niveau de l'étape (b), et avoir ainsi une étape supplémentaire de production d'eau récupérée. Ce mode de réalisation est représenté à la figure 6, qui comprend l'utilisation de 9 colonnes. Les colonnes 1 et 2 et 3 correspondent aux colonnes 1 et 2 et 3 dans les figures 3, 4 et 5. Les colonnes 4 et 5 correspondent à la colonne 4 dans les figures 3, 4, 5. La colonne 6 est nouvelle par rapport aux modes de réalisation des figures 3, 4 et 5. La colonne 7 correspond aux colonnes 5 et 6 dans les figures 3, 4, 5. Les colonnes 8 et 9 correspondent aux colonnes 7 et 8 dans les figures 3, 4 et 5. Le mode de fonctionnement est identique à celui pour les modes de réalisation des figures 3, 4 et 5. La mise en circulation s'applique identiquement ici. De même, on peut définir deux zones de déplacement conformément au second mode de réalisation comme suit: la première zone de déplacement comprend les colonnes 2 à 7 et la deuxième zone de déplacement comprend les colonnes 8, 9 et 1. On peut aussi définir des zones de premier et second déplacements conformément au troisième mode de réalisation. Les première et deuxième zones de premier déplacement comprennent les colonnes 3 à 7 d'une part et 8 à 2 d'autre part. Les première et deuxième zones de second déplacement comprennent les colonnes 2 à 7 d'une part et 8, 9 et 1 d'autre part. Dans le mode de réalisation de la figure 6 le flux sortant de la colonne 3 alimente directement la colonne 4. Dans le mode de réalisation de la figure 6 (tout comme pour les autres modes de réalisation), on peut ajuster le pH des différentes fractions qui sont envoyées sur les colonnes. Par exemple, il est possible de s'assurer que le pH de la fraction ayant été en contact avec la colonne la plus chargée (ici 3) soit inférieur à 2 avant d'être renvoyée sur la colonne suivante. En changeant le pH, il est aussi possible de varier le type de dérivé métallique ionique préférentiellement fixé sur la résine. Il est également possible de charger la solution de lixiviation sur plusieurs colonnes en parallèle.

L'invention s'applique aussi à tout type de séparation par chromatographie sur tout type de produit. Notamment, le procédé selon l'invention peut utiliser 5 fluides d'entrée (ou plus):
- Fluide de Chargement ou charge (Feed): ce liquide contient la charge a traiter et sa composition tampon pH, salinité permettant, en injectant ce fluide sur une colonne, d'adsorber la molécule d'intérêt sur la phase stationnaire. A l'issue de l'étape de chargement, la colonne contient une phase stationnaire sur laquelle le dérivé métallique ionique est adsorbé, la phase liquide située dans la colonne est quant à elle constituée du fluide de chargement dilué (FD, Feed Diluted).
- Fluide de rinçage, d'une salinité et pH identique au fluide de chargement, mais ne contenant pas de charge à traiter. Cette étape renouvelle la phase liquide de la colonne et permet d'éliminer les composés de la charge qui ne sont pas retenus par la phase stationnaire. Dans le cas du sel d'uranium, on utilise par exemple de l'eau ou un acide aqueux.
- Elution de l'espèce désirée : un fluide d'une nature modifiant la nature des interactions entre la molécule cible et la phase stationnaire permet de faire désorber la molécule cible de la phase stationnaire, la molécule cible est alors collectée dans le liquide sortant. Pour éluer le sulfate d'uranium, un éluant typique selon l'invention est l'acide sulfurique, tandis que lorsque l'uranium est sous la forme d'un carbonate d'uranium, le complexe est élué soit par du chlorure de sodium, soit par des solutions de carbonates d'ammonium ou de sodium.
- Régénération: après l'élution, des impuretés peuvent rester fortement adsorbées sur la phase stationnaire, pouvant en pénaliser la stabilité ou le caractère sanitaire Nous avons vu que ces polluants peuvent être de la silice ou bien du fer dans le cas de l'extraction de l'uranium et du cuivre.. Un fluide contenant des additifs acide tel que l'acide sulfurique peut ainsi être utilisé. Dans le cas du sel d'uranium, décrit précédemment, les étapes d'élution de l'espèce désirée et de régénération sont mises en oeuvre simultanément, le régénérant (acide sulfurique) échangeant les sites de la résine pour libérer du sel d'uranium.
- L'injection d'un solvant correspondant au fluide de rinçage utilisé après le chargement permet de vider la colonne du ou des solvants de régénération avant d'effectuer le prochain chargement. On garde ainsi un tampon entre le chargement et la fin de la régénération; on parle d'équilibrage.
- L'injection optionnelle d'un fluide de dépollution permettra de décontaminer la résine des impuretés, et notamment la silice qui s'est fixée sur la résine en compétition avec l'uranium, limitant de ce fait les cinétiques de chargement et d'élution. Typiquement dans le cas de l'invention, une base, de préférence forte telle que l'hydroxyde de sodium ou l'hydroxyde de potassium est utilisable comme fluide décontaminant.

L'invention offre un procédé qui permet de mettre en oeuvre les 5 étapes :
- Etape a : dite d'équilibration au cours de laquelle la solution d'équilibration est injectée sur une au moins une colonne du système pour la vider du solvant de régénération qu'elle contient. En aval de la zone d'équilibration, le fluide soutiré va dans un premier temps être composé majoritairement de la solution de régénération puis majoritairement de la solution d'équilibrage.
- Etape b : dite de chargement au cours de laquelle la solution de charge à traiter est injectée. La molécule d'intérêt est alors fixée sur le support chromatographique avec d'autres impuretés. En sortie de cette zone, en aval du point d'injection, le fluide soutiré contient alors les impuretés les moins retenues.
- Etape c : dite de lavage au cours de laquelle s'effectue un lavage de la colonne où l'on remplace la phase liquide contenant notamment des impuretés non retenues par le solvant de lavage.
- Etape d : dite d'élution au cours de laquelle on injecte une solution modifiant les interactions de la molécule d'intérêt avec le support chromatographique permettant ainsi d'éluer la molécule d'intérêt. En sortie de la zone d'élution, le fluide soutiré va d'abord contenir la solution de lavage, puis une solution riche en dérivé métallique ionique.
- Etape e : dite de régénération au cours de laquelle on injecte une solution de régénération permettant de décrocher les impuretés très fortement adsorbées sur le support.

Dans l'invention, le déplacement périodique des points d'injection peut s'effectuer d'une colonne en une colonne; ainsi on peut gérer chaque colonne (ou zone) de façon indépendante. L'invention permet d'opérer chaque colonne (ou zone) de façon indépendante; notamment le déplacement des points d'injection/soutirage peut être synchrone, asynchrone, de même que l'étape de déplacement des fronts peut être synchrone ou asynchrone, et peut être mise en oeuvre colonne par colonne (ou zone par zone). On peut aussi opérer avec une colonne (ou zone) pour une opération ou avec plusieurs colonnes (ou zones) pour d'autres opérations; ainsi on peut déplacer les points d'injection/soutirage et les fronts d'une colonne pour une zone donnée et de deux ou plusieurs colonnes pour une autre zone donnée.

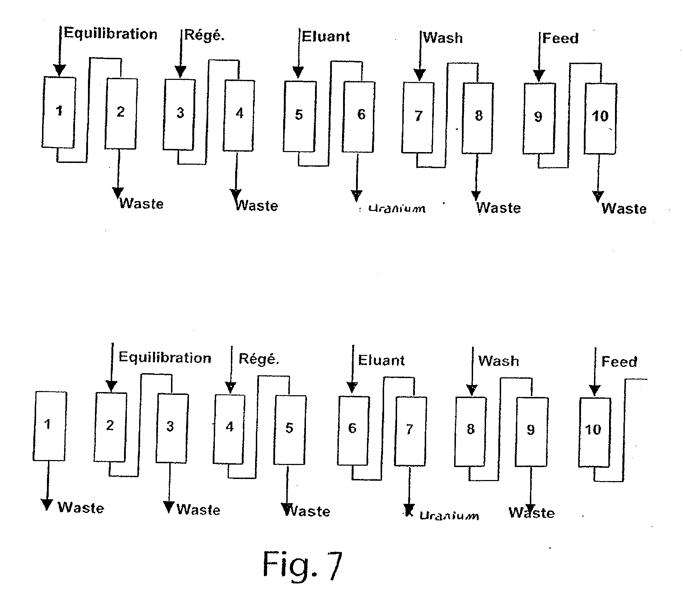

La figure 7 montre un procédé selon l'art antérieur multicolonnes synchrones, périodiques et non séquencées, et mettant enjeu différentes arrivées de fluides. Entre chacune de ces arrivées, on peut définir une zone: par exemple entre l'arrivée de charge (Feed) et l'arrivée du fluide d'équilibrage on définit la zone de chargement. Entre la solution de rinçage (Wash) et la charge (Feed), on défini la zone de rinçage, etc.. Ces zones correspondent aux zones première, deuxième, troisième, quatrième et cinquième du procédé selon l'invention (dans le cas du sel métallique et de résine échangeuse d'ions, les zones quatrième et cinquième peuvent être confondues et l'éluant et le régénérant sont un même fluide). Le déplacement périodique est aussi illustré à la figure 7. On retrouve ici le principe illustré à la figure 1 (qui correspondait au cas avec quatre fluides).

Si on considère la colonne No. 9, en fin de période, elle en en configuration de chargement. Après la commutation, elle se situe juste avant la sortie de l'étape de lavage. Par conséquent, ce qui sort de cette colonne juste après la commutation des lignes contient encore de la charge, contenant donc le dérivé métallique ionique non purifiée, qui se trouve de fait diluée et perdue.

Dans la présente invention, la ligne de charge mais aussi chaque ligne d'arrivée de fluide peut en fait se déplacer librement par rapport aux autres avec la possibilité de présenter une sous séquence de déplacement des fronts. En fait, chaque déplacement des fronts peut se faire ligne par ligne, de façon synchrone ou asynchrone, et ce encore ligne par ligne. Toutes les combinaisons sont envisageables, étant entendu que le déplacement des fronts comprend au moins le déplacement du front de la charge, de préférence aussi le déplacement du front de régénérant. Ce déplacement des fronts, au moins au niveau d'une colonne qui est en phase de chargement, est impossible avec les systèmes selon l'état de la technique.

Il est aussi possible de procéder à un déplacement des fronts selon un incrément d'une colonne, mais aussi d'un incrément inférieur ou supérieur à une colonne.

L'utilisation d'un mode asynchrone permet de réduire le nombre de colonnes totales en faisant coexister dans une même colonne plusieurs zones pendant une période donnée.

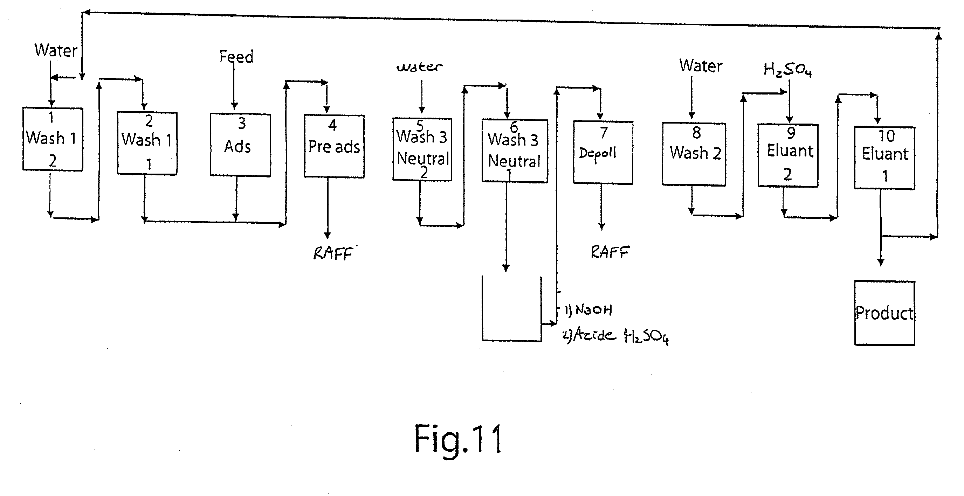

La figure 11 est un exemple d'un procédé selon l'invention avec plusieurs lignes de fluides, ici au nombre de 8. Dans le cas représenté à la figure 11, on représente la séparation d'une impureté telle que définie précédemment. Dans le mode de réalisation, on alimente les colonnes 1 et 2 avec de l'eau comme solution de rinçage, et on obtient en sortie une solution de dérivé métallique ionique diluée. La charge alimente la colonne 3 d'adsorption tandis que la colonne de préadsorption en aval est alimentée par la sortie de la colonne 3 (qui peut être combinée avec la sortie des colonnes de lavage 1, solution de charge diluée) et un effluent est obtenu en sortie de la colonne de préadsorption (raffinat). Les colonnes 5, 6 et 7 sont utilisées pour éliminer une ou plusieurs impuretés selon une procédure de dépollution dépendante de l'impureté considérée. Dans le cas de la silice, on procèdera à une dépollution à la soude, suivie d'une régénération d'une résine à l'acide sulfurique. Chaque étape de traitement étant suivie d'une étape de rinçage.. La colonne 8 est soumise à un lavage avec de l'eau , et l'effluent est additionné d'acide sulfurique. Cette solution est une solution éluante qui est envoyée sur les colonnes 9 et 10, dont l'effluent est l'extrait. Cet extrait fournit le dérivé métallique ionique et l'eau séparée peut être recyclée dans le procédé (représenté ici en retour vers le lavage des colonnes 1 et 2).

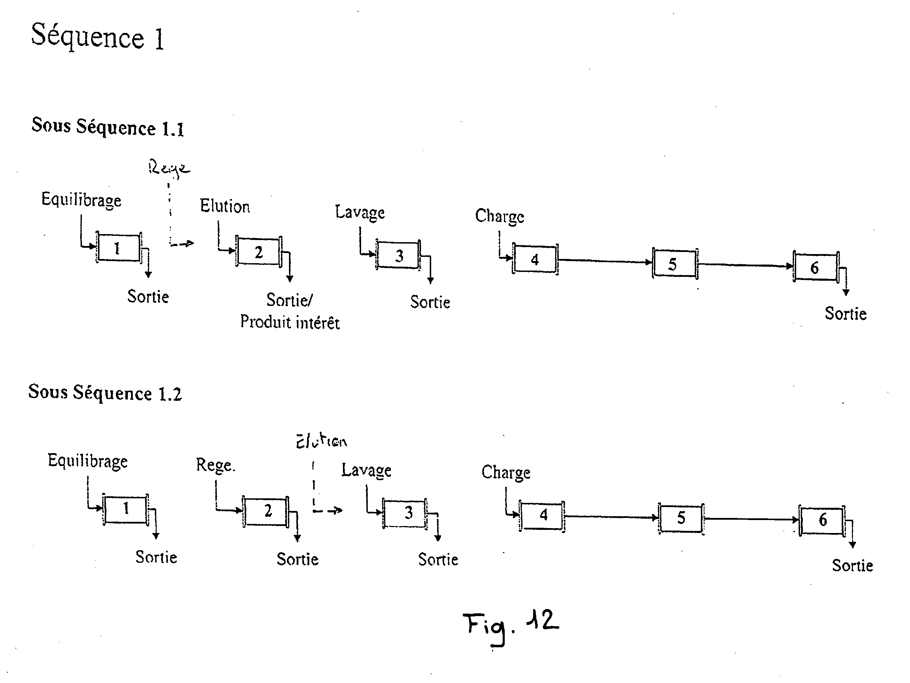

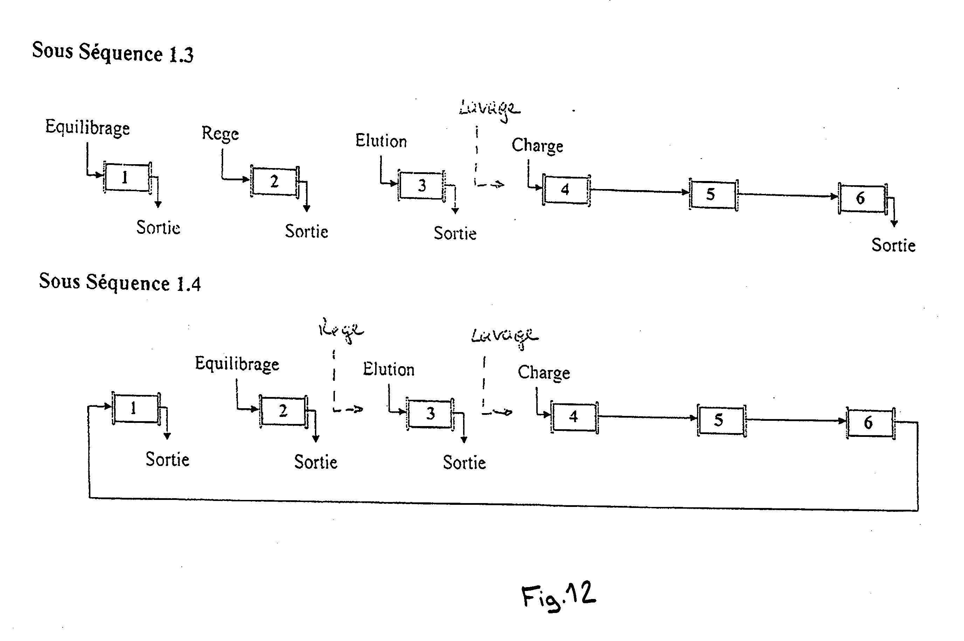

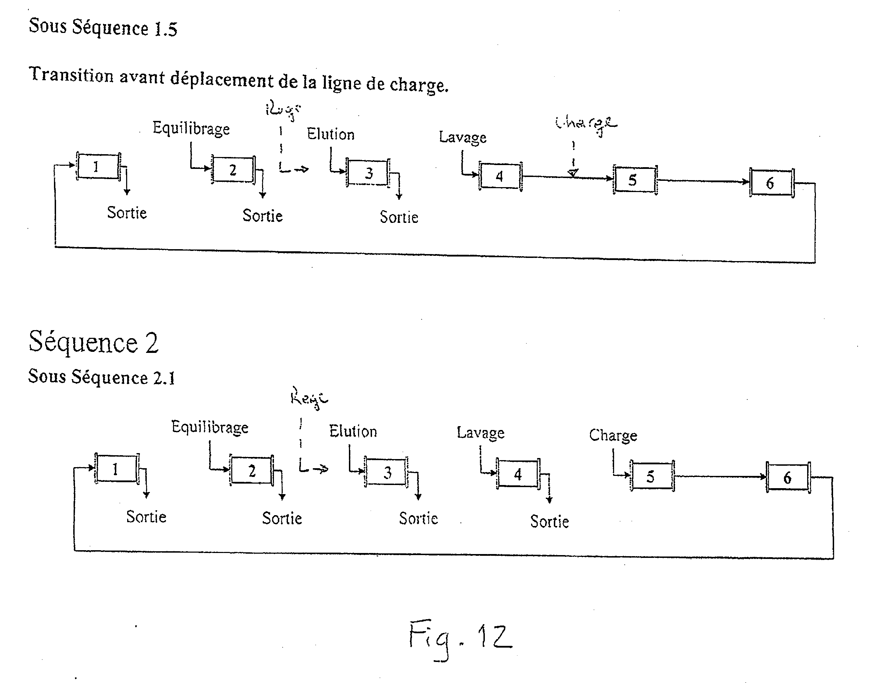

Tandis que le procédé décrit à la figure 7 montrait la mise en oeuvre de ces étapes selon un procédé périodique, non séquencé dans lequel on effectue un déplacement des lignes d'injections des différents solutions de façon synchrone non séquencée, la figure 12 montre un procédé dans lequel les déplacements sont asynchrone et séquencés. La figure 12 montre donc un exemple de mise en oeuvre des étapes (a) à (e) selon l'invention sur un système à 6 colonnes dont la période est décomposée en 5 sous-séquences correspondant aux déplacements de certaines lignes d'injection à différents moments de la Séquence.

En début de première séquence la situation est la suivante :
- la ligne d'injection de la solution d'équilibrage est en colonne 1
- les lignes d'injection de la solution de régénération et d'élution sont en colonne 2. Comme expliqué précédemment, en cas de superposition de lignes, c'est la ligne aval qui prévaut, dans ce cas la ligne d'injection de solution d'élution.
- la ligne d'injection de la solution de lavage est en colonne 3
- la ligne d'injection de la solution de charge à traiter est en colonne 4.

Cette configuration correspond à la sous séquence 1.1 qui dure de t = 0 à par exemple t = 0.24*Δt.

A la fin de la sous séquence 1.1, on déplace d'une colonne par exemple la ligne d'élution. La sous séquence 1.2 commence, la configuration est la suivante:
- la ligne d'injection de la solution d'équilibrage est en colonne 1
- la ligne d'injection de la solution de régénération est en colonne 2.
- la ligne d'injection de la solution d'élution est superposée à l'injection de solution de lavage en colonne 3. La ligne aval primant, c'est la solution de lavage qui est injectée en colonne 3.
- La ligne d'injection de la solution de charge à traiter est en colonne 4.

La sous séquence 1.2 dure par exemple de t = 0.24*Δt à t = 0.36*Δt.

A la fin de la sous séquence 1.2, on déplace par exemple la ligne de lavage. La sous séquence 3 commence, la configuration est la suivante.
- la ligne d'injection de la solution d'équilibrage est en colonne 1
- la ligne d'injection de la solution de régénération est en colonne 2.
- la ligne d'injection de la solution d'élution est en colonne 3.
- la ligne d'injection de la solution de lavage est superposée à la ligne d'injection de la solution de charge à traiter en colonne 4. La charge étant en aval du lavage, c'est l'injection de charge qui prévaut. C'est donc la solution de charge à traiter qui est injectée en colonne 4.

La sous séquence 1.3 dure par exemple de t = 0.36*Δt à t = 0.60*Δt.

A la fin de la sous séquence 1.3, on déplace simultanément les lignes d'équilibrage et de régénération. La sous séquence 1.4 commence, la configuration est la suivante.
- la ligne d'injection de la solution d'équilibrage est en colonne 2
- la ligne d'injection de la solution de régénération et superposée à la ligne d'injection de la solution d'élution en colonne 3. La ligne aval qui prévaut dans ce cas est l'injection de la solution d'élution.
- la ligne d'injection de la solution de lavage est superposée à la ligne d'injection de la solution de charge à traiter en colonne 4. La charge étant en aval du lavage, c'est l'injection de charge qui prévaut. C'est donc la solution de charge à traiter qui est injectée en colonne 4.

La sous séquence 1.4 dure par exemple de t = 0.60*Δt à t = 0.76*Δt.

A la fin de la sous séquence 1.4, on effectue une transition correspondant au déplacement du dérivé métallique ionique contenu dans la phase liquide de la colonne 4 vers la colonne 5. Pour se faire, on arrête d'injecter la solution de charge à traiter, il y donc une transition de l'étape (b) de chargement correspondant au déplacement des fronts de concentrations de la phase liquide des impuretés non retenu et du dérivé métallique ionique par l'étape (c). La transition est donc un arrêt de l'injection de la charge à traiter correspondant au déplacement des fronts induit par l'étape (c).

La sous séquence 1.5 commence, la configuration est la suivante.
- la ligne d'injection de la solution d'équilibrage est en colonne 2
- la ligne d'injection de la solution de régénération et superposée à la ligne d'injection de la solution d'élution en colonne 3. La ligne aval qui prévaut dans ce cas est l'injection de la solution d' élution.
- la ligne d'injection de la solution de lavage est en colonne 4.

La sous séquence 1.5 dure par exemple de t = 0.76*Δt à t = Δt.

A la fin de la sous séquence 1.5 la première période est terminée, la solution de charge à traiter est injectée en colonne 1.5

La sous séquence 2.1 de la séquence 2 peut donc commencer, on remarque que la sous séquence 2.1 de la séquence 2 est similaire à la sous séquence 1.1 de la séquence 1 à ceci près que les lignes sont décalées d'une colonne.

Il apparaît donc que le déplacement asynchrone des lignes permet d'effectuer en séquence 1 sur la colonne 2, les étapes d'élution, régénération et équilibrage, de fait, ceci permet de réduire le nombre des colonnes par rapport à un procédé utilisant un déplacement de type synchrone.

Il apparaît également que grâce à l'invention, la séquence de transition correspondant à l'arrêt de l'injection de la solution de la charge à traiter (étape (b)) permet de ne pas perdre le dérivé métallique ionique encore contenu dans la colonne 4 à la fin de la séquence 1.4.

On peut aussi utiliser plusieurs lignes d'éluants, par exemple pour traiter des solutions contenant plusieurs dérivés métalliques ioniques, qui sont désorbés ou échangés dans des conditions différentes. Un premier éluant permettra de récupérer sélectivement le premier dérivé métallique ionique tandis qu'un second éluant permettre de récupérer sélectivement le second dérivé métallique ionique. Un exemple d'application comprend la récupération de protéines du lait.

Dans la description de la présente invention, le terme "colonne" doit être compris comme signifiant une colonne physique ou tout autre partie d'une colonne identifiable comme une cellule, lorsque la colonne physique comprend des points d'injection et de soutirage à plusieurs niveaux. Une seule colonne physique peut ainsi être divisée en plusieurs sections ou cellules, et l'invention pourra s'appliquer à cette configuration.

L'invention s'applique donc à tous les produits d'intérêt susceptibles d'être séparés par chromatographie. Par exemple l'invention permet la séparation de dérivés métalliques ioniques comme le sel d'uranium, la phase stationnaire étant une résine échangeuse d'ions et les solutions de rinçage étant de l'eau.

### EXEMPLES

Les exemples suivants illustrent l'invention sans la limiter.

### Exemple 1. Dérivé métallique ionique

Le procédé selon l'invention s'applique à tous types de dérivés métalliques, comme par exemple un sel d'uranium tel que le sulfate d'uranyle, le nickel, le cobalt ou encore le cuivre à l'aide d'une résine cationique, éluée par un acide par exemple l'acide sulfurique. L'invention fournit donc un procédé pour séparer un dérivé métallique ionique à partir d'une solution de lixiviation contenant un tel dérivé et des impuretés, par passage de cette solution sur un lit fixe de résine échangeuse d'ions et comprenant au moins quatre zones en série, des moyens d'écoulement de liquide étant disposés entre des zones adjacentes et entre la dernière et la première zones, ledit sel métallique étant sélectivement échangé par contact avec ladite résine échangeuse d'ions et au moins l'une des impuretés étant relativement moins échangée sur cette résine échangeuse d'ions que le sel métallique, résine échangeuse d'ions dont le pouvoir d'échange est régénéré par l'action d'un régénérant, caractérisé en ce qu'il comprend plusieurs séquences, chaque séquence comprenant les étapes suivantes :
(a) introduire un certain volume d'eau à l'entrée de la première zone et soutirer sensiblement simultanément le même volume d'un liquide dilué en ledit sel métallique, au niveau d'un point situé en aval de cette zone;
(b) introduire un certain volume de ladite solution aqueuse à l'entrée de la deuxième zone et soutirer sensiblement simultanément le même volume d'un liquide riche en la ou les impuretés relativement moins échangée, au niveau d'un point situé en aval de cette zone;
(c) introduire un certain volume d'eau à l'entrée de la troisième zone et soutirer sensiblement simultanément le même volume d'un liquide dilué en éluant, au niveau d'un point situé en aval de cette zone;
(d) introduire un certain volume d'éluant à l'entrée de la quatrième zone et soutirer sensiblement simultanément le même volume d'un liquide riche en le sel métallique, au niveau d'un point situé en aval de cette zone;
   les étapes (a), (b), (c) et (d) pouvant être mises en oeuvre de façon simultanée ou non; chaque séquence suivante étant effectuée par le déplacement périodique vers l'aval, sensiblement d'un même incrément de volume, des points d'introduction et de soutirage,
   et comprenant en outre une étape
(e) déplacement des fronts dans les zones avant le déplacement périodique.

Dans le cas du sulfate d'uranyle, l'éluant est une solution acide. Si on compare le procédé selon l'invention à un procédé de l'état de la technique continu pour une production donnée de sel d'uranyle, le procédé permet des gains significatifs. Pour une production identique les consommables sont fortement réduits, la consommation d'eau est inférieure, la production d'effluent réduite, et le nombre de colonnes est également réduit.

### Exemple 2. Dérivé métallique ionique, sulfate d'uranyle.

Pour la mise en oeuvre de la séparation de l'uranium, on met en oeuvre le procédé suivant.

Le fluide de chargement (solution de lixiviation contenant du l'uranium et ses impuretés), contient la charge à traiter. La composition de ce fluide permet au dérivé métallique ionique, de se fixer sur la phase stationnaire. A l'issue de l'étape de chargement, la colonne contient une phase stationnaire sur laquelle le sulfate d'uranyl est fixé par force ionique.

L'étape de rinçage renouvelle ainsi la phase liquide de la colonne afin que les impuretés contenues dans la phase liquide de la colonne afin que les impuretés contenues dans la phase liquide ne soient pas éluées en même temps que le sel métallique au cours de l'étape d'élution.

Le fluide d'élution du sulfate d'uranyl est l'acide sulfurique 2M. En effet il s'avère être un éluant suffisamment énergique de l'uranium IV, en raison de la stabilité très grande des complexes anioniques uranyl-sulfate.

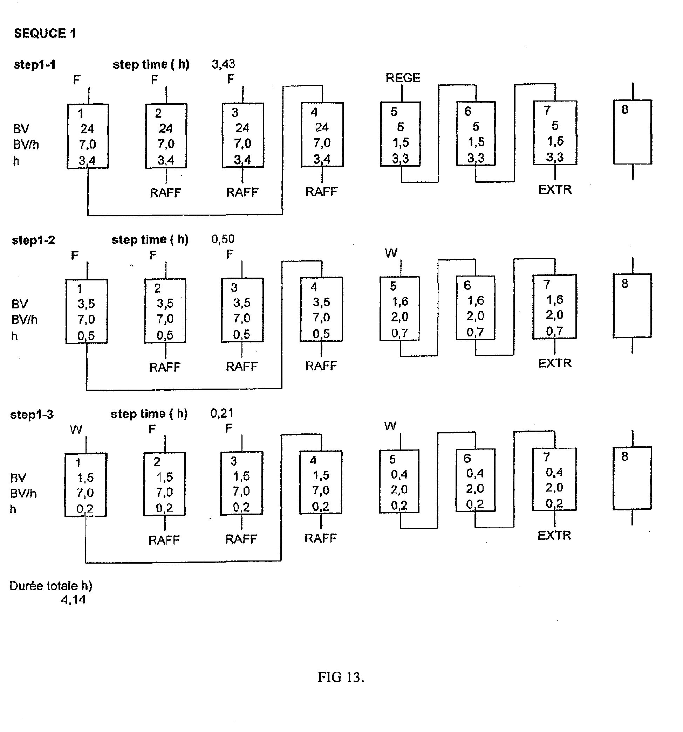

L'essai présenté selon le procédé de séparation multicolonnes séquencé utilise dans cet exemple 8 colonnes, selon les séquences et sous séquences suivantes, tel qu'illustré à la figure 13. Pour chacune des colonnes numérotées de la séquence, les volumes de lit, (BV), les ainsi que les durées sont données.

### Séquence 1

Sous séquence 1.1 : les 4 premières colonnes définissent une zone de chargement. La colonne 5 se situe en zone de régénération. Les colonnes 1 et 4 ainsi que 5 et 7 sont en série. La colonne 8 est en dépollution ou en attente.

Sous séquence 1.2 : Dans cette sous séquence, la colonne 5 est quasiment totalement régénérée, et ne contient plus de sulfate d'uranyl, elle entre alors en zone de rinçage.

Sous séquence 1.3 : Dans cette sous séquence, la colonne 1 est quasiment saturée en solution de lixiviation contenant l'uranium à extraire, elle entre alors en rinçage.

### Séquence 2

Elle est identique à la séquence 1, mais décalée d'une colonne.

Sur le système décrit, un essai est réalisé à la vitesse de chargement de 413 m3/h, la solution de lixiviation contient en uranium à 0.35 g/L ainsi que des impuretés caractéristiques d'une charge issue d'un procédé d'extraction par lixiviation. Les paramètres de procédé utilisés pour la séparation de cette solution sont listés données ci-dessous.
Débit moyen : 413 m3/h
Durée sous-séquence 1 : 3.43 h.
Durée sous-séquence 2 : 0.50 h.
Durée sous séquence 3 : 0.21 h.
Durée séquence: 4.14 h
Capacité résine : 29.9 g/L.

## Revendications

1. Procédé de séparation sur résine par rétention sélective séquentiel multicolonnes pour séparer un dérivé métallique ionique à partir d'une solution de lixiviation contenant un dérivé métallique ionique, par passage de cette solution sur un lit fixe de résine et comprenant au moins trois zones, des moyens d'écoulement de liquide étant disposés entre des zones adjacentes et entre la dernière et la première zone, ce procédé comprenant plusieurs séquences, chaque séquence comprenant au moins une étape choisie parmi une étape d'adsorption, une étape de rinçage, une étape de désorption, mise en oeuvre de façon simultanée ou non, chaque séquence suivante est effectuée par le déplacement des fronts dans les zones vers l'aval sensiblement d'un même incrément avant le déplacement périodique des points d'introduction et de soutirage.

2. Procédé selon la revendication 1, **caractérisé en ce qu'**il comprend plusieurs séquences, chaque séquence comprenant au moins une des étapes suivantes :
(a) introduire un certain volume d'une solution de rinçage à l'entrée de la première zone et soutirer sensiblement simultanément le même volume d'un liquide dilué en ledit dérivé métallique ionique, au niveau d'un point situé en aval de cette zone;
(b) introduire un certain volume de ladite solution de lixiviation de charge à l'entrée de la deuxième zone et soutirer sensiblement simultanément le même volume d'un liquide riche en la ou les impuretés relativement moins retenue, au niveau d'un point situé en aval de cette zone;
(c) introduire un certain volume d'une solution de rinçage à l'entrée de la troisième zone et soutirer sensiblement simultanément le même volume d'un liquide dilué en régénérant, au niveau d'un point situé en aval de cette zone;
(d) optionnellement introduire un certain volume de dépolluant à l'entrée de la quatrième zone et soutirer sensiblement simultanément le même volume d'un liquide dilué, au niveau d'un point situé en aval de cette zone;
(e) introduire un certain volume d'un éluant à l'entrée de la cinquième zone et soutirer sensiblement simultanément le même volume d'un liquide riche en ledit dérivé métallique, au niveau d'un point situé en aval de cette zone;
les étapes (a), (b), (c), (d) et (e) pouvant être mises en oeuvre de façon simultanée ou non;
chaque séquence suivante étant effectuée par le déplacement périodique vers l'aval, sensiblement d'un même incrément de volume, des points d'introduction et de soutirage.

3. Procédé selon l'une des revendications 1 à 2, **caractérisé en ce que** les étapes (d), et (e) sont mise en oeuvre avec un même fluide, ces étapes correspondant alors à une étape consistant à:
(d) introduire un certain volume de régénérant à l'entrée de la quatrième zone et soutirer sensiblement simultanément le même volume d'un liquide riche en ledit dérivé métallique ionique, au niveau d'un point situé en aval de cette zone;
les quatrième et cinquième zones étant alors confondues en une seule quatrième zone.

4. Procédé selon la revendication 1 à 3, **caractérisé en ce que** les étapes (a), (b), (c) et (d) sont mises en oeuvre au moins en partie simultanément.

5. Procédé selon l'une des revendications 1 à 4, **caractérisé en ce que** ledit déplacement des fronts déplace les fronts de façon synchrone dans les différentes zones.

6. Procédé selon la revendication 2, **caractérisé en ce que** le déplacement des fronts déplace les fronts de façon synchrone dans les différentes zones, et comprend les étapes suivantes:
(i) créer une boucle de circulation entre les différentes zones, de la première zone à la dernière zone; et
(ii) mettre en circulation dans ladite boucle pour déplacer les fronts.

7. Procédé selon la revendication 5, **caractérisé en ce que** le déplacement des fronts comprend les étapes suivantes:
(i) créer une première zone de déplacement par liaison fluide de la sortie de la première zone à l'entrée de la deuxième zone et par liaison fluide de la sortie de la deuxième zone à l'entrée de la troisième zone, et déplacement vers l'aval de l'entrée de la première zone pour fournir l'entrée de la première zone de déplacement et déplacement vers l'amont de la sortie de la troisième zone pour fournir la sortie de la première zone de déplacement; et
créer une deuxième zone de déplacement par liaison fluide de la sortie de la troisième zone à l'entrée de la quatrième zone et par liaison fluide de la sortie de la quatrième zone à l'entrée de la cinquième zone et liaison fluide de la sortie de la cinquième zone à l'entrée de la première zone, et déplacement vers l'aval de l'entrée de la troisième zone pour fournir l'entrée de la deuxième zone de déplacement et déplacement vers l'amont de la sortie de la première zone pour fournir la sortie de la deuxième zone de déplacement; et
(ii) introduire un certain volume de solution de rinçage à l'entrée de la première zone de déplacement et soutirer sensiblement simultanément le même volume de solution de rinçage récupérée en sortie de la première zone de déplacement.
(iii) introduire un certain volume de solution de rinçage à l'entrée de la deuxième zone de déplacement et soutirer sensiblement simultanément le même volume de solution de rinçage récupérée en sortie de la deuxième zone de déplacement.

8. Procédé selon l'une des revendications 1 à 4, **caractérisé en ce que** ledit déplacement des fronts déplace les fronts de façon asynchrone dans les différentes zones.

9. Procédé selon la revendication 8, **caractérisé en ce que** le déplacement des fronts comprend les étapes suivantes:
(i) créer une première zone d'un premier déplacement par liaison fluide de la sortie de la première zone à l'entrée de la deuxième zone et par liaison fluide de la sortie de la deuxième zone à l'entrée de la troisième zone; et
créer une deuxième zone d'un premier déplacement par liaison fluide de la sortie de la troisième zone à l'entrée de la quatrième zone et par liaison fluide de la sortie de la quatrième zone à l'entrée de la cinquième zone et par liaison fluide de la sortie de la cinquième zone à l'entrée de la première zone; et
(ii) introduire un certain volume de ladite solution à l'entrée de la première zone de déplacement et soutirer sensiblement simultanément le même volume le même volume d'un liquide dilué en régénérant en sortie de la première zone d'un premier déplacement;
(iii) introduire un certain volume de régénérant à l'entrée de la deuxième zone de déplacement et soutirer sensiblement simultanément le même volume d'un liquide dilué en ledit dérivé métallique ionique en sortie de la deuxième zone d'un premier déplacement;
(iv) créer une première zone d'un second déplacement par liaison fluide de la sortie de la première zone à l'entrée de la deuxième zone et par liaison fluide de la sortie de la deuxième zone à l'entrée de la troisième zone, et déplacement vers l'aval de l'entrée de la première zone pour fournir l'entrée de la première zone d'un second déplacement et déplacement vers l'amont de la sortie de la troisième zone pour fournir la sortir de la première zone d'un second déplacement; et
créer une deuxième zone d'un second déplacement par liaison fluide de la sortie de la troisième zone à l'entrée de la quatrième zone et par liaison fluide de la sortie de la quatrième zone à l'entrée de la cinquième zone et liaison fluide de la sortie de la cinquième zone à l'entrée de la première zone, et déplacement vers l'aval de l'entrée de la troisième zone pour fournir l'entrée de la deuxième zone de déplacement et déplacement vers l'amont de la sortie de la première zone pour fournir la sortie de la deuxième zone de déplacement; et
(vi) introduire un certain volume de solution de rinçage à l'entrée de la première zone d'un second déplacement et soutirer sensiblement simultanément le même volume d'un liquide riche en la ou les impuretés relativement moins retenue en sortie de la première zone d'un second déplacement.
(vii) introduire un certain volume de solution de rinçage à l'entrée de la deuxième zone d'un second déplacement et soutirer sensiblement simultanément le même volume d'un liquide riche en ledit dérivé métallique ionique en sortie de la deuxième zone d'un second déplacement.

10. Procédé selon l'une des revendications 1 à 9, **caractérisé en ce que** l'étape (f) comprend un déplacement des fronts dans toutes les zones avant le déplacement périodique.

11. Procédé selon l'une des revendications 1 à 10, **caractérisé en ce que** l'incrément de volume suivant lequel sont déplacés lesdits points d'introduction et lesdits points de soutirage correspond sensiblement au volume d'une fraction entière d'une zone de matière absorbante, de préférence correspond sensiblement au volume d'une colonne.

12. Procédé selon l'une des revendications 1 à 11, **caractérisé en ce que** ledit liquide dilué en ledit dérivé métallique ionique est au moins en partie envoyé vers l'étape (b).

13. Procédé selon l'une des revendications 1 à 12, **caractérisé en ce qu'**il existe une zone supplémentaire, et **en ce qu'**il comprend en outre une étape (g) introduire tout ou partie du liquide dilué en ledit dérivé métallique ionique obtenu à l'étape (a) au niveau de ladite zone supplémentaire, et récupérer sensiblement le même volume en solution de rinçage au niveau d'un point situé en aval de cette zone.

14. Procédé selon l'une des revendications 1 à 13, **caractérisé en ce que** la chromatographie est une chromatographie d'échange ionique et le dérivé métallique ionique est un sel sélectionné parmi les complexes de l'uranium, de l'or, du cuivre, du zinc, du nickel, du cobalt, ainsi que des PGM, de préférence un sel d'uranium et en particulier un sulfate d'uranium.

15. Procédé selon l'une des revendications 1 à 14, **caractérisé en ce que** l'éluant est l'acide sulfurique.

## Patentansprüche

1. Verfahren zum Abtrennen auf Harz durch sequenzielle, selektive Mehrsäulen-Retention, um ein ionisches Metallderivat aus einer Auslauglösung abzutrennen, die ein ionisches Metallderivat enthält, indem diese Lösung durch ein Festbett hindurchgeführt wird, das aus Harz und mindestens aus drei Zonen besteht, und Mittel zum Ablaufen von Flüssigkeit, die zwischen benachbarten Zonen und zwischen der letzten und der ersten Zone angeordnet sind, umfasst, wobei dieses Verfahren mehrere Sequenzen umfasst, wobei jede Sequenz mindestens einen Schritt umfasst, ausgewählt aus einem Schritt zur Adsorption, einem Schritt zum Spülen, einem Schritt zur Desorption, die gleichzeitig ausgeführt werden oder nicht, wobei jede folgende Sequenz durch die Verschiebung der Fronten in die stromabwärtigen Zonen vor der periodischen Verschiebung der Einführungs- und Entnahmepunkte im Wesentlichen mit einem gleichen Inkrement durchgeführt wird.

2. Verfahren nach Anspruch 1, **dadurch gekennzeichnet, dass** es mehrere Sequenzen umfasst, wobei jede Sequenz mindestens einen der folgenden Schritte umfasst:
(a) Einführen eines bestimmten Volumens einer Spüllösung am Eingang der ersten Zone und im Wesentlichen gleichzeitiges Abziehen des gleichen Volumens einer verdünnten Flüssigkeit aus dem ionischen Metallderivat an einem Punkt, der stromabwärts dieser Zone liegt;
(b) Einführen eines bestimmten Volumens der Auslauglösungsbeschickung am Eingang der zweiten Zone und im Wesentlichen gleichzeitiges Abziehen des gleichen Volumens einer Flüssigkeit, die reich an der oder den relativ weniger zurückgehaltenen Verunreinigungen ist, an einem Punkt, der stromabwärts dieser Zone liegt;
(c) Einführen eines bestimmten Volumens einer Spüllösung am Eingang der dritten Zone und im Wesentlichen gleichzeitiges Abziehen des gleichen Volumens einer verdünnten Flüssigkeit aus Regenerationsmittel an einem Punkt, der stromabwärts dieser Zone liegt;
(d) optional Einführen eines bestimmten Volumens an Schadstoffbeseitiger am Eingang der vierten Zone und im Wesentlichen gleichzeitiges Abziehen des gleichen Volumens einer verdünnten Flüssigkeit an einem Punkt, der stromabwärts dieser Zone liegt;
(e) Einführen eines bestimmten Volumens an Elutionsmittel am Eingang der fünften Zone und im Wesentlichen gleichzeitiges Abziehen des gleichen Volumens einer Flüssigkeit, die reich an dem Metallderivat ist, an einem Punkt, der stromabwärts dieser Zone liegt;
- wobei die Schritte (a), (b), (c), (d) und (e) gleichzeitig ausgeführt werden können oder nicht;
- wobei jede folgende Sequenz durch das periodische Verschieben der Punkte zum Einführen und Abziehen stromabwärts im Wesentlichen um ein gleiches Volumeninkrement durchgeführt wird.

3. Verfahren nach einem der Ansprüche 1 bis 2, **dadurch gekennzeichnet, dass** die Schritte (d) und (e) mit einem gleichen Fluid ausgeführt werden, wobei diese Schritte dann einem Schritt entsprechen, der aus Folgendem besteht:
(d) Einführen eines bestimmten Volumens an Regenerationsmittel am Eingang der vierten Zone und im Wesentlichen gleichzeitiges Abziehen eines gleichen Volumens, das reich an dem ionischen Metallderivat ist, an einem Punkt, der stromabwärts dieser Zone liegt;
wobei die vierte und die fünfte Zone dann zu einer einzigen vierten Zone zusammengeführt werden.

4. Verfahren nach Anspruch 1 bis 3, **dadurch gekennzeichnet, dass** die Schritte (a), (b), (c) und (d) mindestens teilweise gleichzeitig ausgeführt werden.

5. Verfahren nach einem der Ansprüche 1 bis 4, **dadurch gekennzeichnet, dass** die Verschiebung der Fronten die Fronten in den verschiedenen Zonen synchron verschiebt.

6. Verfahren nach Anspruch 2, **dadurch gekennzeichnet, dass** die Verschiebung der Fronten die Fronten in den verschiedenen Zonen synchron verschiebt und die folgenden Schritte umfasst:
(i) Erzeugen einer Zirkulationsschleife zwischen den verschiedenen Zonen von der ersten Zone bis zur letzten Zone; und
(ii) in der Schleife in Zirkulation versetzen, um die Fronten zu verschieben.

7. Verfahren nach Anspruch 5, **dadurch gekennzeichnet, dass** die Verschiebung der Fronten die folgenden Schritte umfasst:
(i) Erzeugen einer ersten Verschiebungszone durch Fluidverbindung vom Ausgang der ersten Zone zum Eingang der zweiten Zone und durch Fluidverbindung vom Ausgang der zweiten Zone zum Eingang der dritten Zone und Verschiebung stromabwärts vom Eingang der ersten Zone, um den Eingang der ersten Verschiebungszone bereitzu-stellen, und Verschiebung stromaufwärts vom Ausgang der dritten Zone, um den Ausgang der ersten Verschiebungszone bereitzu-stellen; und
Erzeugen einer zweiten Verschiebungszone durch Fluidverbindung vom Ausgang der dritten Zone zum Eingang der vierten Zone und durch Fluidverbindung vom Ausgang der vierten Zone zum Eingang der fünften Zone und Fluidverbindung vom Ausgang der fünften Zone zum Eingang der ersten Zone und Verschiebung stromabwärts vom Eingang der dritten Zone, um den Eingang der zweiten Verschiebungszone bereitzustellen und Verschiebung stromaufwärts vom Ausgang der ersten Zone, um den Ausgang der zweiten Verschiebungszone bereitzustellen; und
(ii) Einführen eines bestimmten Volumens an Spüllösung am Eingang der ersten Verschiebungs-zone und im Wesentlichen gleichzeitiges Abziehen des gleichen Volumens an Spüllösung, die am Ausgang der ersten Verschiebungszone zurückgewonnen wird;
(iii)Einführen eines bestimmten Volumens an Spül-lösung am Eingang der zweiten Verschiebungszone und im Wesentlichen gleichzeitiges Abziehen des gleichen Volumens an Spüllösung, die am Ausgang der zweiten Verschiebungszone zurückgewonnen wird.

8. Verfahren nach einem der Ansprüche 1 bis 4, **dadurch gekennzeichnet, dass** die Verschiebung der Fronten die Fronten in den verschiedenen Zonen asynchron verschiebt.

9. Verfahren nach Anspruch 8, **dadurch gekennzeichnet, dass** die Verschiebung der Fronten die folgenden Schritte umfasst:
(i) Erzeugen einer ersten Zone einer ersten Verschiebung durch Fluidverbindung vom Ausgang der ersten Zone zum Eingang der zweiten Zone und durch Fluidverbindung vom Ausgang der zweiten Zone zum Eingang der dritten Zone; und
Erzeugen einer zweiten Zone einer ersten Verschiebung durch Fluidverbindung vom Ausgang der dritten Zone zum Eingang der vierten Zone und durch Fluidverbindung vom Ausgang der vierten Zone zum Eingang der fünften Zone und durch Fluidverbindung vom Ausgang der fünften Zone zum Eingang der ersten Zone; und
(ii) Einführen eines bestimmten Volumens der Spüllösung am Eingang der ersten Verschiebungszone und im Wesentlichen gleichzeitiges Abziehen des gleichen Volumens des gleichen Volumens einer verdünnten Flüssigkeit aus Regenerationsmittel am Ausgang der ersten Zone einer ersten Verschiebung;
(iii)Einführen eines bestimmten Volumens an Regenerationsmittel am Eingang der zweiten Verschiebungszone und im Wesentlichen gleichzeitiges Abziehen des gleichen Volumens einer verdünnten Flüssigkeit aus dem ionischen Metallderivat am Ausgang der zweiten Zone einer ersten Verschiebung;
(iv) Erzeugen einer ersten Zone einer zweiten Verschiebung durch Fluidverbindung vom Ausgang der ersten Zone zum Eingang der zweiten Zone und durch Fluidverbindung vom Ausgang der zweiten Zone zum Eingang der dritten Zone und Verschiebung stromabwärts vom Eingang der ersten Zone, um den Eingang der ersten Zone einer zweiten Verschiebung bereitzustellen, und Verschiebung stromaufwärts vom Ausgang der dritten Zone, um den Ausgang der ersten Zone einer zweiten Verschiebung bereitzustellen; und
Erzeugen einer zweiten Zone einer zweiten Verschiebung durch Fluidverbindung vom Ausgang der dritten Zone zum Eingang der vierten Zone und durch Fluidverbindung vom Ausgang der vierten Zone zum Eingang der fünften Zone und Fluidverbindung vom Ausgang der fünften Zone zum Eingang der ersten Zone und Verschiebung stromabwärts vom Eingang der dritten Zone, um den Eingang der zweiten Verschiebungszone bereitzustellen und Verschiebung stromaufwärts vom Ausgang der ersten Zone, um den Ausgang der zweiten Verschiebungszone bereitzustellen; und
(vi) Einführen eines bestimmten Volumens an Spüllösung am Eingang der ersten Zone einer zweiten Verschiebung und im Wesentlichen gleichzeitiges Abziehen des gleichen Volumens einer Flüssigkeit, die reich an der oder den relativ weniger zurückgehaltenen Verunreinigungen ist, am Ausgang der ersten Zone einer zweiten Verschiebung;
(vii) Einführen eines bestimmten Volumens an Spüllösung am Eingang der zweiten Zone einer zweiten Verschiebung und im Wesentlichen gleichzeitiges Abziehen des gleichen Volumens einer Flüssigkeit, die reich an dem ionischen Metallderivat ist, am Ausgang der zweiten Zone einer zweiten Verschiebung.

10. Verfahren nach einem der Ansprüche 1 bis 9, **dadurch gekennzeichnet, dass** der Schritt (f) vor der periodischen Verschiebung eine Verschiebung der Fronten in allen Zonen umfasst.

11. Verfahren nach einem der Ansprüche 1 bis 10, **dadurch gekennzeichnet, dass** das Volumeninkrement, gemäß dem die Einführungspunkte und die Abziehpunkte verschoben werden, im Wesentlichen dem Volumen einer ganzen Fraktion einer Zone aus absorbierendem Material entsprechen, bevorzugt im Wesentlichen dem Volumen einer Säule entsprechen.

12. Verfahren nach einem der Ansprüche 1 bis 11, **dadurch gekennzeichnet, dass** die verdünnte Flüssigkeit aus dem ionischen Metallderivat mindestens teilweise zu Schritt (b) geschickt wird.

13. Verfahren nach einem der Ansprüche 1 bis 12, **dadurch gekennzeichnet, dass** es eine zusätzliche Zone gibt, und dadurch, dass es ferner einen Schritt (g) zum Einführen der gesamten oder eines Teils der verdünnten Flüssigkeit aus dem ionischen Metallderivat, das in Schritt (a) erhalten wurde, an der zusätzlichen Zone, und das Zurückzugewinnen im Wesentlichen des gleichen Volumens an Spüllösung an einem Punkt, der stromabwärts dieser Zone liegt, umfasst.

14. Verfahren nach einem der Ansprüche 1 bis 13, **dadurch gekennzeichnet, dass** es sich bei der Chromatographie um eine Ionenaustauschchromatographie handelt, dass es sich bei dem ionischen Metallderivat um ein Salz handelt, ausgewählt aus Uran-, Gold-, Kupfer-, Zink-, Nickel-, Cobaltkomplexen sowie PGM, bevorzugt einem Uransalz und insbesondere einem Uransulfat.

15. Verfahren nach einem der Ansprüche 1 bis 14, **dadurch gekennzeichnet, dass** das Elutionsmittel Schwefelsäure ist.

## Claims

1. A multi-column sequenced separation process on resin for separating an ionic metal derivative from a leaching solution containing an ionic metal derivative, by passing said solution on a fixed resin bed and comprising at least three zones, liquid flow means being arranged between adjacent zones and between the last and the first zone, said process comprising several sequences, each sequence comprising at least one step chosen from an adsorption step, a rinsing step, a desorption step, implemented simultaneously or not, each following sequence is done by the displacement of the fronts in the zones in the downstream direction by substantially a same increment before the periodic displacement of the introduction and withdrawal points.

2. The process according to claim 1, **characterized in that** it comprises several sequences, each sequence comprising at least one of the following steps:
(a) introducing a certain volume of a rinsing solution at the inlet of the first zone and substantially simultaneously withdrawing the same volume of a diluted liquid in said ionic metal derivative, at a point situated downstream from said zone;
(b) introducing a certain volume of said load leaching solution at the inlet of the second zone and substantially simultaneously withdrawing the same volume of a liquid rich in the relatively less retained impurity(ies), at a point situated downstream from said zone;
(c) introducing a certain volume of a rinsing solution at the inlet of the third zone and substantially simultaneously withdrawing the same volume of a liquid diluted in regenerant, at a point situated downstream from said zone;
(d) optionally introducing a certain volume of depolluting agent at the inlet of the fourth zone and substantially simultaneously withdrawing the same volume of a diluted liquid, at a point situated downstream from said zone,
(e) introducing a certain volume of an eluent at the inlet of the fifth zone and substantially simultaneously withdrawing the same volume of a liquid rich in said metal derivative, at a point situated downstream from said zone;
steps (a), (b), (c), (d) and (e) being able to be done simultaneously or not;
each subsequent sequence being done through the periodic downstream movement, by substantially a same volume increment, of the introduction and withdrawal points,
and also including a step
(f) displacement of the fronts in at least zones (b) and (e) before the periodic displacement.

3. The process according to one of claims 1 to 2, **characterized in that** steps (d) and (e) are done with a same fluid, these steps corresponding then to a step consisting of:
(d) introducing a certain volume of regenerant at the inlet of the fourth zone and substantially simultaneously withdrawing the same volume of a liquid rich in said ionic metal derivative, at a point situated downstream from said zone;
the fourth and fifth zones then being combined into a single fourth zone.

4. The process according to claim 1 to 3, **characterized in that** the steps (a), (b), (c) and (d) are done at least partially simultaneously.

5. The process according to one of claims 1 to 4, **characterized in that** said displacement of the fronts displaces the fronts synchronously in the different zones.

6. The process according to claim 2, **characterized in that** the displacement of the fronts displaces the fronts synchronously in the various zones, and comprises the following steps:
(i) creating a circulation loop zone between the different zones, from the first zone to the fifth zone; and
(ii) putting in circulation in said loop to displace the fronts.

7. The process according to claim 5, **characterized in that** the displacement of the fronts comprises the following steps:
(i) creating a first displacement zone through fluid connection of the outlet of the first zone to the inlet of the second zone and through fluid connection of the outlet of the second zone to the inlet of the third zone, and downstream displacement of the inlet of the first zone to provide the inlet of the first displacement zone and upstream displacement of the outlet of the third zone to provide the outlet of the first displacement zone; and
creating a second displacement zone through fluid connection of the outlet of the third zone to the inlet of the fourth zone and through fluid connection of the outlet of the fourth zone to the inlet of the fifth zone and fluid connection of the outlet of the fifth zone to the inlet of the first zone, and downstream displacement of the inlet of the third zone to provide the inlet of the second displacement zone and upstream displacement of the outlet of the first zone to provide the outlet of the second displacement zone; and
(ii) introducing a certain volume of rinsing solution at the inlet of the first displacement zone and substantially simultaneously withdrawing the same volume of recovered rinsing solution at the outlet of the first displacement zone.
(iii) introducing a certain volume of rinsing solution at the inlet of the second displacement zone and substantially simultaneously withdrawing the same volume of recovered rinsing solution at the outlet of the second displacement zone.

8. The process according to one of claims 1 to 4, **characterized in that** said displacement of the fronts displaces the fronts asynchronously in the different zones.

9. The process according to claim 8, **characterized in that** the displacement of the fronts comprises the following steps:
(i) creating a first zone of a first displacement through fluid connection of the outlet of the first zone to the inlet of the second zone and through fluid connection of the outlet of the second zone to the inlet of the third zone; and
creating a second zone of a first displacement through fluid connection of the outlet of the third zone to the inlet of the fourth zone and through fluid connection of the outlet of the fourth zone to the inlet of the fifth zone and fluid connection of the outlet of the fifth zone to the inlet of the first zone; and
(ii) introducing a certain volume of said solution at the inlet of the first displacement zone and substantially simultaneously withdrawing the same volume the same volume [sic] of a diluted regenerant liquid at the outlet of the first zone of a first displacement;
(iii)introducing a certain volume of regenerant at the inlet of the second displacement zone and substantially simultaneously withdrawing the same volume of a liquid diluted in said ionic metal derivative at the outlet of the second zone of a first displacement;
(iv)creating a first zone of a second displacement through fluid connection of the outlet of the first zone to the inlet of the second zone and through fluid connection of the outlet of the second zone to the inlet of the third zone, and downstream displacement of the inlet of the first zone to provide the inlet of the first zone of a second displacement and upstream displacement of the outlet of the third zone to provide the outlet of the first zone of a second displacement; and
(v) creating a second zone of a second displacement through fluid connection of the outlet of the third zone to the inlet of the fourth zone and through fluid connection of the outlet of the fourth zone to the inlet of the fifth zone and fluid connection of the outlet of the fifth zone to the inlet of the first zone, and downstream displacement of the inlet of the third zone to provide the inlet of the second displacement zone and upstream displacement of the outlet of the first zone to provide the outlet of the second displacement zone; and
(vi) introducing a certain volume of rinsing solution at the inlet of the first zone of a second displacement and substantially simultaneously withdrawing the same volume of a liquid rich in the relatively less retained impurity(ies) or impurities at the outlet of the first zone of a second movement.
(vii) introducing a certain volume of rinsing solution at the inlet of the second zone of a second displacement and substantially simultaneously withdrawing the same volume of a liquid rich in said ionic metal derivative at the outlet of the second zone of a second displacement.

10. The process according to one of claims 1 to 9, **characterized in that** step (f) comprises a movement of the fronts in all of the zones before the periodic displacement.

11. The process according to one of claims 1 to 10, **characterized in that** the volume increment according to which said introduction points and said withdrawal points are displaced corresponds substantially to the volume of an entire fraction of a zone of absorbent material, preferably corresponds substantially to the volume of a column.

12. The process according to one of claims 1 to 11, **characterized in that** said liquid diluted in said ionic metal derivative is at least in part sent to step (b).

13. The process according to one of claims 1 to 12, **characterized in that** there is an additional zone, and **in that** it also includes a step (g) introducing all or part of the liquid diluted in said ionic metal derivative obtained in step (a) at said additional zone, and recovering substantially the same volume in rinsing solution at a point situated downstream from said zone.

14. The process according to one of claims 1 to 13, **characterized in that** the chromatography is of the ion exchange type and the ionic metal derivative is a salt selected from the complexes of uranium, gold, copper, zinc, nickel, cobalt, as well as PGM, preferably a salt of uranium and in particular a uranium sulfate.

15. The process according to one of claims 1 to 14, **characterized in that** the eluent is sulfuric acid.
